# EUROPÄISCHE PATENTSCHRIFT

(11) **EP 3 651 966 B1**
(45) Veröffentlichungstag und Bekanntmachung des Hinweises auf die Patenterteilung: **23.08.2023**
(21) Anmeldenummer: 18740201.1
(22) Anmeldetag: 11.07.2018
(51) Int. Cl.: B29C 45/78, B29C 45/72, B29C 51/42, B29C 51/46, B29B 13/02

(54) **HEIZMODUL, VERFAHREN ZUR HERSTELLUNG EINES FORMTEILS UND VORRICHTUNG ZUR HERSTELLUNG EINES FORMTEILS**
HEATING MODULE, METHOD FOR PRODUCING A MOLDED PART AND DEVICE FOR PRODUCING A MOLDED PART
MODULE DE CHAUFFAGE, PROCÉDÉ POUR LA FABRICATION D'UN ÉLÉMENT MOULÉ ET DISPOSITIF POUR LA FABRICATION D'UN ÉLÉMENT MOULÉ

(30) Priorität: 14.07.2017 DE 102017115959
(43) Veröffentlichungstag der Anmeldung: 20.05.2020
(73) Patentinhaber: Leonhard Kurz Stiftung & Co. KG, 90763 Fürth (DE)
(72) Erfinder: LEYH, Oliver, 90590530 Wendelstein (DE); KUHN, André, 91710 Gunzenhausen (DE); HAHN, Martin, 91567 Herrieden (DE)
(74) Vertreter: Louis Pöhlau Lohrentz
(86) Internationale Anmeldenummer: PCT/EP2018/068835
(87) Internationale Veröffentlichungsnummer: WO 2019/012007

(56) Entgegenhaltungen:
- EP-A1- 2 184 149
- WO-A1-2008/034624
- DE-A1-102006 045 027
- DE-A1-102008 021 560
- DE-T2- 60 201 862
- JP-A- 2001 009 865
- JP-A- 2014 172 227
- US-A1- 2004 265 409
- Nn ET AL: "Basic Principles of non-contact temperature measurement", , 30. Juni 2016 (2016-06-30), Seiten 1-40, XP055505709, Gefunden im Internet: URL:https://www.optris.com/applications?fi le=tl_files/pdf/Downloads/Brochures%20US/o ptris-basic-brochure.pdf [gefunden am 2018-09-10]
- EICHLER T: "BERUEHRUNGSLOSE TEMPERATURMESSUNG IN DER KUNSTSTOFFINDUSTRIE SCHNELL UND GENAU", PLASTVERARBEITER, HUETHIG GMBH, HEIDELBERG, DE, Bd. 52, Nr. 4, 1. April 2001 (2001-04-01), Seite 94/95, XP001036332, ISSN: 0032-1338
- STEINKO W: "OPTIMIERUNGSPOTENZIALE BEIM SPRITZGIESSEN ERKENNEN", KUNSTSTOFFE, CARL HANSER VERLAG, MUNCHEN, DE, Bd. 93, Nr. 10, 1. Januar 2003 (2003-01-01), Seiten 118-125, XP001174618, ISSN: 0023-5563

## Beschreibung

Die Erfindung betrifft ein Heizmodul, ein Verfahren zur Herstellung eines Formteils sowie eine Vorrichtung zur Herstellung eines Formteils.

Es ist bekannt, eine zu verarbeitende Flachware unmittelbar vor dem Schließen des Tiefziehwerkzeugs oder vor dem Schließen der Spritzgussform bei IMD-Verfahren (IMD = "In-Mould Decoration") oder vor dem Heißprägen bei 3DHS-Verfahren (3DHS = "3D Hot Stamping", siehe das Dokument WO 2014053381 A1) vorzuheizen. Dies, um die Flachware für die nachfolgenden Prozessschritte beispielsweise der vorstehenden Verfahren flexibler und besser verarbeitbar zu machen. Dennoch zeigen nach Durchführung des vorstehenden Verfahrens gefertigte Werkstücke häufig Falten und/oder Risse.

Das Dokument JP 2001 009865 A betrifft eine In-Mould Decoration Vorrichtung mit einer Heizplatte.

Das Dokument DE 10 2008 021560 A1 betrifft eine Herstellungsvorrichtung und ein Verfahren zum Behandeln einer mattenförmigen Werkstofflage.

Es ist somit Aufgabe der vorliegenden Erfindung, die Herstellung von Formteilen zu verbessern und insbesondere die oben angeführten Probleme zu vermeiden und/oder zu verringern und/oder ein verbessertes Heizmodul und ein verbessertes Verfahren zur Herstellung eines Formteils sowie eine verbesserte Vorrichtung zur Herstellung eines Formteils bereitzustellen.

Die Aufgabe wird gelöst durch ein Heizmodul nach Anspruch 1.

Weiter wird die Aufgabe gelöst durch ein Verfahren zur Herstellung eines Formteils nach Anspruch 12, wobei ein Folienelement mittels eines Heizmoduls nach Anspruch 1 erwärmt wird.

Weiter wird die Aufgabe gelöst durch eine Vorrichtung nach Anspruch 8.

Der Erfindung liegt die Erkenntnis zu Grunde, dass bei den bekannten Verfahren das Auftreten von Falten und/oder Rissen häufig auf eine nicht homogene und/oder an kritischen Verformungszonen auf eine nicht ausreichende Erwärmung der Flachware vor und/oder während der Verformung zurückzuführen ist. Dadurch, dass durch zumindest einen Sensor die Erwärmung des Folienelements überprüfbar ist sowie durch die Verwendung von zwei oder mehreren Heizsegmenten die Erwärmung des Folienelements lokal unterschiedlich erfolgen kann, kann das erwärmte Folienelement beispielsweise in einem Tiefziehverfahren, einem Spritzgussverfahren, insbesondere einem IMD-Verfahrens und/oder einem Heißprägeverfahren, insbesondere einem 3DHS-Verfahren, an die spezifischen Anforderungen des jeweiligen Verformungsprozesses besonders gut angepasst weiterverarbeitet werden.

Das erwärmte Folienelement wird vorzugsweise in einem Rolle-zu-Rolle-Verfahren oder einem Step-and-Repeat-Verfahren weiterverarbeitet.

Vorteilhafte Ausgestaltungen der Erfindung sind in den Unteransprüchen bezeichnet.

Vorzugsweise erfasst der Sensor oder zumindest einer der Sensoren den Zustand der Erwärmung des Folienelements berührungslos in ein oder mehreren zugeordneten zweiten Bereichen des Folienelements. Der Sensor oder zumindest einer der Sensoren erfasst insbesondere die Temperatur oder die Oberflächentemperatur des Folienelements in den ein oder mehreren zugeordneten zweiten Bereichen des Folienelements.

Das Folienelement besteht vorzugsweise aus einem geeigneten Polyestermaterial, wie zum Beispiel PET (PET = Polyethylenterephthalat) oder Polypropylen, Polystyrol, PVC (PVC = Polyvinylchlorid), PMMA (PMMA = Polymethylmethacrylat), ABS (ABS = Acrylnitril-Butadien-Styrol), Polyamid und/oder BOPP (Englisch: "biaxially oriented polypropylene" = Biaxial orientiertes Polypropylen).

Das Folienelement kann als einschichtiges oder mehrschichtiges Folienelement bereitgestellt werden, wobei das Folienelement insbesondere flexibel, dehnbar und/oder elastisch ausgebildet ist. Das Folienelement kann insbesondere als einschichtige oder mehrschichtige Platte bereitgestellt werden, wobei die Platte vorzugsweise starr, unelastisch und/oder dehnbar ausgebildet ist. Das mehrschichtige Folienelement oder die Platte weisen insbesondere ein oder mehrere vollflächige oder nur flächenbereichsweise partiell aufgebrachte Dekorschichten, Metallschichten, Metalloxidschichten, insbesondere Reflexionsschichten, optisch aktive Schichten, insbesondere optisch variable Schichten, elektrisch leitfähige Schichten, farbige Schichten, insbesondere farbige Lackschichten, zumindest teilweise oder vollständig lichtdurchlässige Schichten, Ablöseschichten, Barriereschichten, Kleberschichten, Haftvermittlerschichten, und/oder Kunststoffschichten auf.

Bevorzugt wird das Folienelement als Laminierfolie oder als Transferfolie mit einer einschichtigen oder mehrschichtigen Trägerlage und einer einschichtigen oder mehrschichtigen Übertragungslage bereitgestellt. Im Falle der Transferfolie wird die Trägerlage bei dem Transfer von der Übertragungslage abgelöst und die Übertragungslage bei dem Transfer übertragen.

Die Dicke des Folienelements liegt zwischen 10 µm und 500 µm, insbesondere zwischen 20 µm und 250 µm.

Unter "Zustand der Erwärmung des Folienelements" ist insbesondere die Temperatur des Folienelements zu verstehen. Der Zustand der Erwärmung des Folienelements ist damit insbesondere durch die Temperatur an der Oberfläche, insbesondere der dem Heizmodul zugewandten Oberfläche des Folienelements und/oder durch die mittlere Temperatur des Folienelements definiert.

Der Zustand der Erwärmung des Folienelements wird bevorzugt in einem oder mehreren Bereichen des Folienelements, insbesondere in einem oder mehreren ersten und/oder zweiten Bereichen des Folienelements, erfasst. Vorzugsweise erfasst der Sensor oder zumindest einer der Sensoren den Zustand der Erwärmung des Folienelements oder einer Oberfläche des Folienelements als Temperatur, insbesondere als Oberflächentemperatur bzw. mittlere Temperatur, bevorzugt als absolute oder relative Temperatur, in einem oder mehreren der ersten und/oder zweiten Bereiche des Folienelements.

Unter "berührungslos" ist hier zu verstehen, dass der Sensor oder zumindest einer der Sensoren während der Erfassung des Zustandes der Erwärmung des Folienelements das Folienelement nicht berühren, insbesondere nicht mechanisch berühren. Der Sensor oder zumindest einer der Sensoren erfassen den Zustand der Erwärmung des Folienelements oder einem oder mehreren ersten und/oder zweiten Bereichen des Folienelements bevorzugt aus einer vorbestimmten Distanz. Diese Distanz kann beispielsweise zwischen 10 mm und 250 mm betragen.

Ein Vorteil der berührungslosen Messung besteht darin, dass die Gefahr, das Folienelement oder die Oberfläche des Folienelements durch eine Berührung mit dem Sensor zu beschädigen, umgangen wird.

Der Sensor oder zumindest einer der Sensoren ist vorzugsweise ein Pyrometer. Das Pyrometer erfasst insbesondere den Zustand der Erwärmung des Folienelements berührungslos in einem zugeordneten zweiten Bereich des Folienelements. Das Pyrometer erfasst insbesondere die Oberflächentemperatur des Folienelements in dem zugeordneten zweiten Bereichs des Folienelements.

Zumindest eines der Pyrometer erfasst vorzugsweise die Temperatur des Folienelements in einem oder mehreren ersten und/oder zweiten Bereichen des Folienelements. Bevorzugt analysiert zumindest eines der Pyrometer die von dem Folienelement abgestrahlte Wärmestrahlung, wobei sich insbesondere über die Höhe der Intensität und die Lage des Emissionsmaximums der entsprechenden Wärmestrahlungsverteilung die Temperatur des Folienelements bestimmen lässt.

Vorzugsweise erfasst der Sensor oder zumindest einer der Sensoren, insbesondere das Pyrometer oder zumindest eines der Pyrometer, den Zustand der Erwärmung des Folienelements in einem zugeordneten zweiten Bereich und/oder einem oder mehreren zweiten Bereichen des Folienelements. Der Sensor oder zumindest einer der Sensoren, insbesondere das Pyrometer oder zumindest eines der Pyrometer, erfassen bevorzugt den Zustand der Erwärmung des Folienelements in einem oder mehreren ersten Bereichen des Folienelements. Einer oder mehrere der zweiten Bereiche des Folienelements überlappen sich insbesondere jeweils oder vollständig mit einem oder mehreren der ersten Bereiche des Folienelements. Einer oder mehrere der zweiten Bereiche des Folienelements entsprechen vorzugsweise einem oder mehreren der ersten Bereiche des Folienelements.

Vorzugsweise ist der Sensor oder zumindest einer der Sensoren ein Wärmebildsensor zur Aufnahme bzw. Detektierung eines Wärmebildes in Form einer zumindest zweidimensional ausgebildeten Information einer Wärmeverteilung. Der Sensor ist insbesondere eine Wärmebildkamera. Der Wärmebildsensor oder die Wärmebildkamera erfasst insbesondere den Zustand der Erwärmung des Folienelements in einer Vielzahl von zweiten Bereichen des Folienelements berührungslos. Vorzugsweise erfasst der Wärmebildsensor den Zustand der Erwärmung des gesamten Folienelements oder in einem oder mehreren der ersten Bereiche des Folienelements und/oder in einem oder mehreren der zweiten Bereiche des Folienelements. Der Wärmebildsensor erfasst den Zustand der Erwärmung des Folienelements insbesondere durch die Erfassung von IR-Strahlung (IR = Infrarotstrahlung = Elektromagnetische Strahlung aus einem oder mehreren Wellenlängenbereichen oder dem Wellenlängenbereich des infraroten Teil des elektromagnetischen Spektrums), welche insbesondere von dem Folienelement oder einem oder mehreren ersten und/oder zweiten Bereichen des Folienelements emittiert und/oder abgestrahlt wird.

Vorteilhafterweise wird der Wärmebildsensor dazu eingesetzt, den Aufwärm- oder Aufheizvorgang des gesamten Folienelements zu erfassen und für Kontrollzwecke bereitzustellen. Der Wärmebildsensor stellt einem Betrachter insbesondere zumindest ein farbkodiertes Wärmebild für einen vorbestimmten Zeitpunkt bereit, mit Hilfe dessen der Betrachter den jeweils zugeordneten Zustand der Erwärmung des Folienelements vorzugsweise überprüft.

Das Folienelement kann dabei entweder über seine gesamte Oberfläche dieselben optischen Eigenschaften aufweisen, beispielsweise bei einem einfarbigen Dekor über die gesamte Fläche des Folienelements. Das Folienelement kann aber alternativ auch flächenbereichsweise unterschiedliche optische Eigenschaften aufweisen und damit insbesondere aufgrund unterschiedlicher reflektierender und/oder absorbierender Oberflächeneigenschaften unterschiedliche Wärmebildinformationen in diesen jeweiligen Flächenbereichen erzeugen. Diese unterschiedlichen Wärmebildinformationen können separat oder gemeinsam von dem Wärmebildsensor erfasst werden. Es ist dabei auch möglich, dass das Folienelement spezielle Markierungen und/oder Dekorelemente enthält, die eine zum jeweiligen Umfeld der Markierung und/oder des Dekorelementes unterschiedliche bzw. kontrastierende Wärmebildinformation bereitstellt. Diese Markierung und/oder Dekorelement kann beispielsweise verwendet werden, um bestimmte Bereiche des Formteils zu kennzeichnen. Beispielsweise ist es möglich, mit solchen Markierungen und/oder Dekorelementen Bereiche des Folienelements bzw. des Formteils zu kennzeichnen und/oder hervorzuheben, die eine abweichende Aufwärmung oder Aufheizung erfordern. Auf dem Wärmebild ist dann besonders leicht optisch erkennbar, welche Erwärmung in diesen so gekennzeichneten Bereichen vorliegt.

Weiter sind einer oder mehrere der Sensoren, welche insbesondere einem oder mehreren der Heizsegmente zugeordnet sind, Wärmebildsensoren, welche jeweils einen oder mehrere erste und/oder zweite Bereiche des Folienelements erfassen.

Die Messgenauigkeit der Sensoren, insbesondere der Pyrometer oder des Wärmebildsensors, ist insbesondere auf einen Messfehler von größer gleich -0,1K und kleiner gleich +0,1K um einen jeweiligen Messwert herum beschränkt, wobei die Messfehler bevorzugt symmetrisch oder asymmetrisch sind. Der Messfehler ist vorzugsweise auf eine Variation von größer gleich -0,1K und kleiner gleich 0,1K um den Messwert herum beschränkt.

Vorzugsweise umfassen eines oder mehrere der Heizsegmente jeweils den Sensor oder zumindest einen der Sensoren. Der zweite Bereich oder zumindest einer der zweiten Bereiche des Folienelements, in welchem bzw. in welchen der Sensor bzw. die Sensoren bevorzugt den Zustand der Erwärmung des Folienelements erfassen, überlappen insbesondere zumindest teilweise mit einem dem jeweiligen Heizsegment zugeordneten ersten Bereich des Folienelements.

Es hat sich als vorteilhaft erwiesen, wenn jedem Heizsegment jeweils ein erster Bereich des Folienelements und jedem Sensor jeweils ein zweiter Bereich des Folienelements zugeordnet wird, wobei insbesondere jedes Heizsegment jeweils einen Sensor aufweist. Durch eine derartige Anordnung weist jedes Heizsegment einen Sensor auf, welcher den Zustand der Erwärmung in einem zugeordneten zweiten Bereich des Folienelements erfasst, und ist einem ersten Bereich des Folienelements zugeordnet, welcher von dem Heizsegment erwärmt wird. Es hat sich als besonders vorteilhaft erweisen, wenn sich der jeweilige erste Bereich mit dem jeweiligen zweiten Bereich derart überlappen, dass beide Bereiche nicht mehr voneinander unterscheidbar sind.

Vorzugsweise ist der zweite Bereich oder zumindest einer der zweiten Bereiche des Folienelements, in welchem bzw. in welchen der Sensor bzw. die Sensoren bevorzugt den Zustand der Erwärmung des Folienelements erfassen, insbesondere innerhalb des dem jeweiligen Heizsegment zugeordneten ersten Bereichs des Folienelements angeordnet.

Vorzugsweise erfasst der Sensor oder einer der Sensoren den Zustand der Erwärmung des Folienelements in zwei oder mehreren zweiten Bereichen des Folienelements. Insbesondere überlappen die zweiten Bereiche des Folienelements jeweils zumindest teilweise einen der ersten Bereiche des Folienelements. Bevorzugt wird jeweils einem der ersten Bereiche jeweils ein einzelner zweiter Bereich zugeordnet.

Vorzugsweise sind zumindest zwei der zwei oder mehreren Heizsegmente gegeneinander beweglich in dem Heizmodul angeordnet. Das Heizmodul weist eine Stellvorrichtung auf, mittels der die relative Lageanordnung von zwei oder mehreren der Heizsegmente zueinander veränderbar ist. Insbesondere sind ein oder mehrere der Heizsegmente in dem Heizmodul in vertikaler oder horizontaler Richtung verschiebbar gelagert und/oder ein oder mehrere der Heizsegmente in dem Heizmodul kippbar gelagert. Die horizontale bzw. vertikale Position und/oder der Kippwinkel ist insbesondere mittels der Stellvorrichtung einstellbar. Bevorzugt ist die horizontale bzw. vertikale Position und/oder der Kippwinkel an die Kontur des Folienelements anpassbar oder einstellbar.

Die Geometrie des Folienelements und/oder des Formteils und/oder einer Kavität und/oder einer Patrize oder eines Stempels kann einer ebenen oder gekrümmten Fläche und/oder einem in zwei Richtungen besonders stark ausgedehnten und in eine Richtung nur geringfügig ausgedehnten Körpers gleichen. Zur Bestimmung der Kontur oder des Konturverlaufs des Folienelements bzw. des Formteils, insbesondere des gekrümmten Folienelements bzw. Formteils, wird die Krümmung oder der Krümmungsradius an einer Vielzahl von Punkten des Folienelements bzw. des Formteils oder an einer Vielzahl von Ortskoordinaten des Folienelements bzw. des Formteils bestimmt, um die geometrische Form des Folienelements bzw. des Formteils zu erfassen. Ein flächenförmiges Folienelement bzw. des Formteils weist parallel zu zumindest einer Richtung einen Krümmungsverlauf entlang dieser zumindest einen Richtung auf. Die Kontur oder der Konturverlauf des Folienelements bzw. des Formteils wird vorzugsweise mittels der mittleren Krümmung oder der Gauß-Krümmung beschrieben.

Ein Schnitt des Folienelements bzw. des Formteils entlang einer beliebigen Richtung parallel zu der durch die beiden ausgedehnten Richtungen des Folienelements bzw. des Formteils aufgespannten Ebene folgt vorzugsweise einer zumindest abschnittsweise gekrümmten Kurve, insbesondere einer zumindest abschnittsweise gekrümmten offenen Kurve, wobei die Kurve beispielsweise ein Teilstück einer geschlossenen Kurve ist. Eine oder mehrere der Konturen und/oder eine oder mehrere der Konturverläufe des Folienelements bzw. des Formteils folgen einer einseitig gekrümmten Kurve, so dass vorzugsweise das Vorzeichen der Krümmung überall gleich ist, so dass insbesondere die Krümmung zumindest einer Kurve das Vorzeichen nicht ändert. Insbesondere ist die Kurve eine ein- oder zweidimensionale Kurve.

Unter einer Krümmung wird insbesondere eine lokale Abweichung einer Kurve und/oder Kontur von einer Geraden verstanden. Unter der Krümmung einer Kurve bzw. Kontur wird insbesondere eine Richtungsänderung pro durchlaufener Länge und/oder Strecke eines genügend kurzen Kurvenstücks bzw. Konturstücks beziehungsweise Kurvenverlaufs und/oder Konturverlaufs verstanden. Die Krümmung einer Geraden und die Krümmung einer ebenen Fläche ist überall gleich Null. Ein Kreis mit einem Radius r hat überall die gleiche Krümmung, nämlich 1/r. Bei den meisten Kurven bzw. Konturen ändert sich die Krümmung von Punkt zu Punkt, insbesondere ändert sich die Krümmung von Punkt zu Punkt kontinuierlich. Die Krümmung einer Kurve bzw. Kontur in einem Punkt P gibt somit an, wie stark die Kurve bzw. die Kontur in der unmittelbaren Umgebung des Punktes P von einer Geraden oder einer ebenen Fläche abweicht. Den Betrag der Krümmung bezeichnet man als Krümmungsradius und dieser entspricht dem Kehrwert des Betrages eines lokalen Radiusvektors. Der Krümmungsradius ist der Radius des Kreises, der in einer lokalen Umgebung des Berühr- und/oder Tangentialpunkts P einer Kurve bzw. Kontur die beste Näherung darstellt.

Versuche haben vorteilhafterweise gezeigt, dass vorbestimmte erste Bereiche des Folienelements insbesondere gleichmäßiger oder homogener erwärmt werden, wenn das zumindest dem ersten Bereich des Folienelements zugeordnete Heizsegment in Richtung des ersten Bereichs des Folienelements gegenüber den möglichen umliegenden Heizsegmenten bewegt und angeordnet wird. Hierbei werden beispielsweise erste Bereiche des Folienelements, welche kleine Krümmungsradien aufweisen, homogener erwärmt, als wenn das zugeordnete Heizsegmente in einem konstanten Abstand verbleibt.

Weiter ist es vorteilhaft, eines der Heizsegmente gegenüber den möglichen umliegenden Heizsegmenten näher an den entsprechenden zugeordneten ersten Bereich des Folienelements anzuordnen, um beispielsweise eine höhere Temperatur in dem entsprechenden zugeordneten ersten Bereich des Folienelements zu erzielen als in den umliegenden ein oder mehreren ersten Bereichen des Folienelements.

Es hat sich als vorteilhaft erwiesen, ein oder mehrere der Heizsegmente derart gegenüber dem Folienelement zu verkippen und/oder zu verschieben, dass die den ein oder mehreren Heizsegmenten zugeordneten ersten Bereiche des Folienelements schneller und/oder stärker erwärmt werden. Je kleiner der Abstand eines der Heizsegmente bezüglich des zugeordneten ersten Bereichs des Folienelements ist, desto besser ist die Wärmeübertragung, insbesondere die berührungslose Wärmeübertragung, von dem entsprechenden Heizsegment auf den zugeordneten ersten Bereich des Folienelements und desto schneller wird der zugeordnete erste Bereich erwärmt. Durch die Verschiebbarkeit und/oder Verkippbarkeit der Heizsegmente und die hierdurch erreichte effizientere Erwärmung des Folienelements lassen sich elektrischer Strom bzw. Stromkosten sparen und die Umwelt schonen.

Vorzugsweise weist die Stellvorrichtung ein oder mehrere elektrische Stellmotoren und/oder ein oder mehrere pneumatische und/oder hydraulische Aktoren auf, mittels denen insbesondere die relative Lageanordnung von zwei oder mehreren der Heizsegmente zueinander veränderbar ist.

Die Verwendung von elektrischen Stellmotoren und/oder pneumatischen und/oder hydraulischen Aktoren zur Veränderung der relativen Lageanordnung von zweien oder mehreren der Heizsegmente zueinander, ergibt sich der Vorteil, dass die Heizsegmente nicht manuell eingestellt werden müssen, sondern beispielsweise von einem Computer aus, welcher insbesondere über ein oder mehrere Treiber mit der Stellvorrichtung der Heizsegmente verbunden ist, eingestellt werden.

Besonders vorteilhaft ist, wenn das Heizmodul und/oder die Vorrichtung zur Herstellung eines Formteils mit einer elektrischen Steuereinrichtung, insbesondere einem Computer, versehen und/oder von einer elektrischen Steuereinrichtung, insbesondere einem Computer, angesteuert wird und/oder das Verfahren zur Herstellung des Formteils gesteuert durch eine elektrische Steuerungseinrichtung, insbesondere einem Computer durchgeführt wird.

Es hat sich als vorteilhaft erwiesen, dass die Steuereinrichtung über ein oder mehrere erste Regelkreise eines oder mehrere der Heizsegmente steuert und/oder über ein oder mehrere zweite Regelkreise die Stellvorrichtung steuert. Als Eingangsparameter der ersten und/oder zweiten Regelkreise dient insbesondere der von dem zumindest einen Sensor erfasste Zustand der Erwärmung des Folienelements und/oder Daten über die Kontur des Formteils und/oder ein Soll-Temperaturprofil des Folienelements.

Von der Steuereinrichtung wird bevorzugt wie folgt vorgegangen, um die Heizleistung und/oder die Positionierung der Heizsegmente einzustellen:
Die Steuerungseinrichtung sendet an einen oder mehreren der Sensoren das Kommando, die Temperatur in einem oder mehreren den Sensoren zugeordneten zweiten Bereichen des Folienelements zu erfassen und die erfassten Daten an die Steuereinrichtung zurückzusenden. Hierdurch wird die Istwert-Temperaturverteilung des Folienelements von der Steuereinrichtung erfasst. Die Istwert-Temperaturverteilung wird zusammen mit einer vorbestimmten Sollwert-Temperaturverteilung als Eingangsparameter eines Regelkreises verwendet, mittels dem die Steuereinrichtung die Heizsegmente und/oder die Stellvorrichtung ansteuert. Falls die Steuereinrichtung beispielsweise einen Unterschied zwischen der Istwert-Temperatur eines der von dem Sensor eines der Heizsegmente zugeordneten zweiten Bereichs und der Sollwert-Temperatur des dem Heizsegment zugeordneten ersten Bereichs feststellt, so wird die Heizleistung insbesondere basierend auf dem Regelalgorithmus des Regelkreises derart verringert oder erhöht, dass bevorzugt eine Angleichung der Temperaturen stattfindet. Vorzugsweise findet eine Rückkoppelung dieser Temperaturregelung iterativ über sukzessive Messungen statt, bis die Sensoren in den jeweiligen zugeordneten zweiten Bereichen Istwert-Temperaturen erfassen, welchen den bereitgestellten Sollwert-Temperaturen des Folienelements bis auf eine vorbestimmte Toleranz entsprechen.

Vorzugsweise sind ein oder mehrere der Heizelemente von einem Keramik-Heizelement oder einem IR-Heizelement gebildet, wobei die Heizelemente insbesondere zumindest ein wärmeerzeugendes Medium aufweisen. Das wärmeerzeugende Medium wird beispielsweise durch Heizröhren oder auch elektrisch betriebene, sich aufgrund ihres elektrischen Widerstand aufheizende Heizleiter bereitgestellt, welche insbesondere eine Länge zwischen 50 mm und 10000 mm aufweisen. Eines oder mehrere der Heizsegmente weisen insbesondere eine Segmentgröße in zumindest einer der lateralen Richtungen zwischen 50 mm und 2500 mm, vorzugsweise zwischen 100 mm und 500 mm, auf. Als laterale Richtungen werden die jeweiligen Richtungen parallel zu der Breite, der Höhe und der Tiefe des Heizelements bezeichnet. Eines oder mehrere der Heizelemente weisen beispielsweise eine Breite zwischen 20 mm und 2500 mm und/oder eine Höhe zwischen 50 mm und 2500 mm und/oder eine Tiefe zwischen 25 mm und 75 mm auf. Bevorzugt weisen Benachbarte der Heizsegmente einen Segmentabstand zwischen 0 mm und 150 mm, insbesondere zwischen 0 mm und 75 mm, auf. Die Heizelemente weisen insbesondere eine Heizgenauigkeit von größer als -0,1K und kleiner als 0,1K auf.

Vorzugsweise sind zwei oder mehrere Heizsegmente in vertikaler Richtung gegeneinander versetzt in dem Heizmodul angeordnet, wobei die Heizsegmente beispielsweise derart versetzt zueinander angeordnet sind, dass jedes der Heizsegmente insbesondere einen innerhalb einer vorbestimmten Toleranz gleichen Abstand zu dem jeweiligen zugeordneten ersten Bereich des Folienelements aufweist. Bevorzugt folgt die Anordnung der Heizsegmente in vertikaler Richtung der Anordnung den den Heizsegmenten zugeordneten ersten Bereichen der Folienelemente mit einem vorbestimmten konstanten oder variablen Abstand. Der jeweilige Abstand eines oder mehrerer der Heizsegmente zu dem Folienelement oder zu den jeweiligen den Heizsegmenten zugeordneten ersten Bereichen des Folienelements liegt zwischen 20 mm und 2000 mm, insbesondere zwischen 25 mm und 500 mm, besonders bevorzugt zwischen 25 mm und 250 mm.

Dabei gilt insbesondere, dass der Abstand der Heizsegmente zum Folienelement in einer x-Richtung etwa einmal bis zweimal, bevorzugt 1,5 Mal so groß sein sollte, wie der Abstand der Heizsegmente untereinander in einer y-Richtung, wobei die x-Richtung und die y-Richtung vorzugsweise senkrecht aufeinander angeordnet sind.

Dabei gilt insbesondere weiterhin, dass bei einer Verdopplung des Abstands der Heizsegmente zum Folienelement die Heizleistung der Heizsegmente verdoppelt werden muss, um annähernd dieselbe oder eine äquivalente Energiemenge auf der Oberfläche des Folienelements zur Aufheizung bereitstellen zu können.

Vorzugsweise weist die Vorrichtung ein Heizmodul, insbesondere in einer der vorstehend beschriebenen Ausführungsformen, und eine Formwerkzeug zur Verformung des zumindest einen durch das Heizmodul erwärmten Folienelements, insbesondere mittels Tiefziehen, Hinterspritzen und/oder durch Anlegung eines Druckgefälles zwischen Vorder- und Rückseite des Folienelements, sowie zur Ausbildung des Formteils auf.

Vorzugsweise weist das Formwerkzeug zwei Werkzeughälften auf, zwischen denen das Folienelement bevorzugt anordenbar ist. Das Heizmodul ist insbesondere in einer oberen und/oder unteren Werkzeughälfte und/oder einer ersten und/oder zweiten Werkzeughälfte angeordnet, derart, dass bevorzugt nach Schließen der Werkzeughälften das Folienelement mittels des Heizmoduls erwärmbar ist. Das Formwerkzeug weist insbesondere Mittel zur Anlegung eines Druckgefälles zwischen Vorder- und Rückseite des Folienelements auf, derart, dass insbesondere durch das Druckgefälle zwischen Vorder- und Rückseite des Folienelements das Folienelement zur Ausbildung des Formteils verformt wird. Das Druckgefälle zwischen der Vorderseite und der Rückseite des Folienelements wird beispielsweise durch ein Anlegen eines Vakuums oder eines Unterdrucks zwischen dem Folienelement und der unteren Werkzeughälfte und/oder durch ein Anlegen eines Überdrucks zwischen dem Folienelement und der oberen Werkzeughälfte bereitgestellt.

Die Erzeugung oder Vernichtung des Druckunterschiedes zwischen der Vorderseite und der Rückseite des Folienelements erfolgt insbesondere derart, dass der Betrag des Druckunterschiedes über zumindest ein bestimmtes oder unbestimmtes Zeitinterval erhöht bzw. vermindert wird, wobei der Betrag des Druckunterschiedes bevorzugt über einen funktionalen Zusammenhang einen Abhängigkeit von der Zeit aufweist. Die Erhöhung des Betrages des Druckunterschiedes über ein bestimmtes Zeitintervall folgt beispielsweise einer Sigmoidfunktion.

Vorzugsweise weist die Vorrichtung eine Formstation auf, welche insbesondere das Formwerkzeug umfasst. Die Vorrichtung weist bevorzugt einen Schlitten zur Aufnahme des Folienelements auf. Die Vorrichtung weist insbesondere eine Transportvorrichtung zum Transport des Folienelements mittels des Schlittens zu dem Heizmodul und zu der Formstation auf.

Vorzugsweise weist das Formwerkzeug die erste Werkzeughälfte und die zweite Werkzeughälfte auf. Das Folienelement ist insbesondere zwischen der ersten Werkzeughälfte und der zweiten Werkzeughälfte das Folienelement anordenbar. Das Formwerkzeug weist insbesondere optional eine Klemmvorrichtung zum Festklemmen des Folienelements auf. Das Heizmodul ist bevorzugt beweglich gelagert, derart, dass das Heizmodul vorzugsweise zwischen das Folienelement und der zweiten Werkzeughälfte einfahrbar und vor Schließen der Werkzeughälften herausfahrbar ist. Die erste und/oder die zweite Werkzeughälfte weist insbesondere zumindest einen Einspritzkanal zum Einspritzen einer Materialschmelze auf.

Vorzugsweise wird die Heizleistung der zwei oder mehreren Heizsegmente jeweils einzeln festgelegt oder eingestellt, wobei die Festlegung oder Einstellung der Heizsegmente manuell oder mittels zumindest eines Regelkreises und/oder mittels zumindest eines Computers erfolgt. Die Heizleistung der Heizsegmente erfolgt insbesondere über einen oder mehrere Regelkreise, welche mit einem oder mehreren der Sensoren der Heizsegmente verbunden sind, wobei der Sensor oder die Sensoren den Zustand der Erwärmung des Folienelements bevorzugt mittels zumindest eines Regelkreises und/oder mittels zumindest eines Computers erfassen. Vorzugsweise wird die Heizleistung zumindest eines der Heizsegmente mittels eines Vergleichs zwischen dem Istwert des Zustandes der Erwärmung des Folienelements und dem Sollwert des Zustandes der Erwärmung des Folienelements festgelegt oder eingestellt. Insbesondere wird die Heizleistung zumindest eines der Heizsegmente basierend auf dem von dem zumindest einem Sensor erfassten Zustand der Erwärmung des Folienelements festgelegt oder eingestellt.

Vorzugsweise wird die Heizleistung zumindest eines der Heizsegmente basierend auf dem von dem zumindest einem Sensor erfassten Zustand der Erwärmung des Folienelements sowie einem vordefinierten, von der Konturgestaltung des Formteils bestimmten Sollwert-Temperaturprofils des Folienelements festgelegt oder eingestellt, wobei die Festlegung oder Einstellung der Heizleistung des zumindest einen Heizsegments insbesondere mittels zumindest eines Regelkreises erfolgt, welcher vorzugsweise mit dem zumindest einen Sensor und dem zumindest einen Heizelement verbunden ist.

Vorzugsweise wird die Heizleistung zumindest eines der Heizsegmente basierend auf den von dem zumindest einem Sensor erfassten Zustand der Erwärmung des Folienelements sowie Daten über die Kontur des Formteils festgelegt oder eingestellt.

Vorzugsweise wird die Positionierung der Heizsegmente basierend auf Daten über die Kontur des Formteils festgelegt oder eingestellt, wobei die Daten über die Kontur des Folienelements ein oder mehrere der folgenden Daten umfassen: Vorliegen und Position von Krümmungen der Kontur, Krümmungsradius, Krümmungsrichtung, Beabstandung von einer Referenzfläche, insbesondere Referenzebene, vertikale oder horizontale Beabstandung eines Oberflächenbereichs der Kontur von einem oder mehreren der Heizsegmente, Position von Ausnehmungen und/oder Durchbrechungen des Formteils.

Vorzugsweise wird die Heizleistung zumindest eines der Heizsegmente basierend auf dem von dem zumindest einem Sensor erfassten Zustand der Erwärmung des Folienelements in dem dem Heizsegment und/oder in dem dem einem anderen der Heizsegmente zugeordneten ersten Bereich des Folienelements festgelegt oder eingestellt.

Vorzugsweise sind ein oder mehrere der Heizsegmente in der Stellvorrichtung in vertikaler oder horizontaler Richtung verschiebbar gelagert und/oder ein oder mehrere der Heizsegmente in dem Heizmodul kippbar gelagert. Die horizontale bzw. vertikale Position und/oder der Kippwinkel einer oder mehrerer der Heizsegmente in dem Heizmodul ist mittels der Stellvorrichtung einstellbar, insbesondere an die Kontur des Folienelements einstellbar.

Vorzugsweise umfasst das Verfahren zur Herstellung des Formteils die Anordnung des Folienelements zwischen zwei Werkzeughälften. Weitere Verfahrensschritte umfassen das Schließen der Werkzeughälften und/oder das Erwärmen des Folienelements insbesondere mittels des Heizmoduls, welches bevorzugt in der oberen und/oder unteren Werkzeughälfte und/oder der ersten und/oder der zweiten Werkzeughälfte angeordnet ist. Das Folienelement wird vorzugsweise durch ein Anlegen eines Druckgefälles zwischen Vorder- und Rückseite des Folienelements zur Ausbildung des Formteils verformt. Insbesondere wird das Formteil in einem weiteren Verfahrensschritt entnommen.

Weiter umfasst das Verfahren zur Herstellung eines Formteils einen Verfahrensschritt, bei dem das Folienelement bevorzugt in einen Schlitten eingelegt und mittels des Schlittens zu dem Heizmodul transportiert wird. Insbesondere erwärmt das Heizmodul das in den Schlitten eingelegte Folienelement, wobei das Folienelement auf eine Temperatur zwischen 50°C und 500°C, insbesondere zwischen 100°C und 300°C, aufgeheizt wird. Das Folienelement wird bevorzugt mittels des Schlittens zu einer Formstation transportiert. Vorzugsweise wird das Folienelement in der Formstation zur Ausbildung des Formteils verformt. Bevorzugt wird das Formteil in einem weiteren Verfahrensschritt, insbesondere nach der Ausbildung des Formteils, aus der Formstation entnommen.

Weiter umfasst das Verfahren zur Herstellung eines Formteils weitere Verfahrensschritte: Insbesondere Einlegen des Folienelements und/oder Verfahren des Heizmoduls derart, dass dieses bevorzugt über dem Folienelement angeordnet ist. Vorzugsweise ein Erwärmen des Folienelements durch das Heizmodul und/oder Verformung des Folienelements insbesondere durch Anlegen eines Druckgefälles zwischen Vorder- und Rückseite des Folienelements zur Ausbildung des Formteils. Bevorzugt wird das Formteil in einem weiteren Verfahrensschritt, insbesondere nach der Ausbildung des Formteils, entnommen.

Das Verfahren zur Herstellung eines Formteils weist vorzugsweise die Verfahrensschritte auf: Die Anordnung des Folienelements zwischen einer eine Kavität und/oder einen Stempel aufweisende ersten Werkzeughälfte und einer zweiten Werkzeughälfte, wobei die Kavität und/oder der Stempel oder der Patrize insbesondere eine eindimensional oder zweidimensional ausgerichtete Oberflächenstruktur aufweist. Bevorzugt folgt die Form der Kavität und/oder des Stempels einer zweidimensionalen Fläche, wobei die Fläche insbesondere durch zumindest einen Krümmungsverlauf in zumindest einer vorbestimmten Richtung ausgezeichnet ist. Vorzugsweise wird das Heizmoduls zwischen das Folienelement und der zweiten Werkzeughälfte eingefahren und/oder durch das Heizmodul erwärmt. In einem optionalen Verfahrensschritt wird das Folienelement mittels einer ersten Klemmvorrichtung an die erste Werkzeughälfte geklemmt. In einem weiteren optionalen Verfahrensschritt wird das Folienelement insbesondere durch die Bereitstellung eines Unterdrucks oder Vakuums zwischen der ersten Werkzeughälfte und dem Folienelement derart verformt, dass das Folienelement vorzugsweise der Kontur der Kavität und/oder des Stempels folgt. Insbesondere umfasst ein weiterer Verfahrensschritt das Herausfahren des Heizmoduls, wobei das Heizmodul bevorzugt aus dem Raum zwischen der ersten Werkzeughälfte und dem Folienelement herausgefahren wird. Die erste Werkzeughälfte und die zweite Werkzeughälfte werden insbesondere in einem weiteren Verfahrensschritt geschlossen. Die Ausbildung des Formteils erfolgt insbesondere durch das Einspritzen einer Materialschmelze durch zumindest einen Einspritzkanal in der ersten Werkzeughälfte und/oder der zweiten Werkzeughälfte. Zwei weitere Verfahrensschritte umfassen vorzugsweise die Öffnung der ersten Werkzeughälfte und zweiten Werkzeughälfte sowie optional die Öffnung der Klemmvorrichtung bzw. die Entnahme des Formteils.

In einem weiteren bevorzugten Verfahrensschritt in dem Verfahren zur Herstellung eines Formteils wird eine Kavität zwischen dem Folienelement und der erste und/oder zweiten Werkzeughälfte durch das Schließen der ersten Werkzeughälfte und der zweiten Werkzeughälfte bereitgestellt.

In einer Ausführung umfassen die erste und/oder die zweite Werkzeughälfte das Heizmodul und/oder einen oder mehrere der Sensoren.

Dabei ist es möglich, dass die Heizsegmente und/oder die Sensoren hinter der Wandung der jeweiligen Werkzeughälfte angeordnet sind und die Wandung direkt und insbesondere lokal jeweils unterschiedlich stark aufheizen. Die Heizsegmente können dabei elektrisch betrieben sein und insbesondere induktiv auf die Werkzeughälfte wirken und/oder auch hydraulisch mit einer beheizten strömenden Flüssigkeit in Heizkanälen betrieben sein. Da die Wandung sehr nah benachbart zu dem Folienelement angeordnet ist und in ihrer Ausformung bereits der dreidimensionalen Form des Formteils folgt, kann das Folienelement über die gesamte Fläche gleichmäßig beheizt werden. Es kann auf ein zeitaufwendiges Einfahren und Ausfahren eines separaten beweglichen Heizmoduls verzichtet werden, was die Zykluszeit reduzieren kann.

Im Folgenden wird die Erfindung anhand von mehreren Ausführungsbeispielen unter Zuhilfenahme der beiliegenden Zeichnungen beispielhaft erläutert. Dabei zeigen:
- Fig. 1: zeigt eine schematische Darstellung eines Heizmoduls
- Fig. 2: zeigt eine schematische Darstellung eines Heizmoduls
- Fig. 3: zeigt eine schematische Darstellung eines Heizmoduls
- Fig. 3a: zeigt eine schematische Darstellung eines Heizmoduls
- Fig. 4: zeigt eine schematische Darstellung einer Vorrichtung
- Fig. 5: zeigt eine schematische Darstellung einer Vorrichtung
- Fig. 6: zeigt eine schematische Darstellung einer Vorrichtung
- Fig. 7: zeigt eine schematische Darstellung einer Vorrichtung
- Fig. 8: zeigt eine schematische Darstellung einer Vorrichtung und eines Verfahrensschrittes
- Fig. 9: zeigt eine schematische Darstellung einer Vorrichtung und eines Verfahrensschrittes
- Fig. 10: zeigt eine schematische Darstellung einer Vorrichtung und eines Verfahrensschrittes
- Fig. 11: zeigt eine schematische Darstellung einer Vorrichtung und eines Verfahrensschrittes
- Fig. 12: zeigt eine schematische Darstellung einer Vorrichtung und eines Verfahrensschrittes
- Fig. 13: zeigt eine schematische Darstellung einer Vorrichtung und eines Verfahrensschrittes
- Fig. 14: zeigt eine schematische Darstellung einer Vorrichtung und eines Verfahrensschrittes
- Fig. 15: zeigt eine schematische Darstellung einer Vorrichtung und eines Verfahrensschrittes
- Fig. 16: zeigt eine schematische Darstellung einer Vorrichtung und eines Verfahrensschrittes

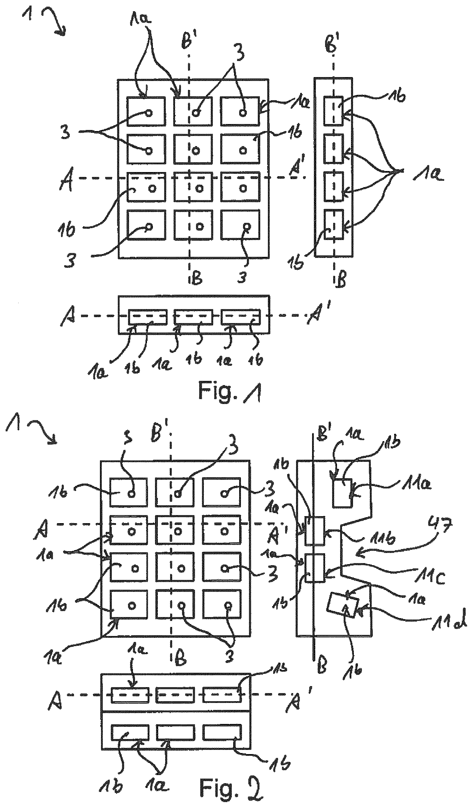

Die Figur 1 zeigt ein Heizmodul 1 in Aufsicht umfassend zwölf Heizsegmente 1a, welche jeweils zumindest ein Heizelement 1b aufweisen. Rechts neben dem Heizmodul ist ein erster Querschnitt des Heizmoduls 1 entlang der Achse B-B' gezeigt und unterhalb des Heizmoduls 1 ist ein zweiter Querschnitt des Heizmoduls entlang der Achse A-A' gezeigt. Die zwölf Heizsegmente 1a sind in drei Spalten bezüglich der durch die Achse A-A' gekennzeichneten Richtung und in vier Zeilen bezüglich der durch die Achse B-B' gekennzeichneten Richtung in dem gezeigten Heizmodul 1 angeordnet und weisen jeweils einen Sensor 3 auf.

Der erste Querschnitt und der zweite Querschnitt des Heizmoduls 1 umfassen vier bzw. drei Heizsegmente 1a, welche jeweils gleiche Abstände zueinander aufweisen. Die vier Heizsegmente weisen allesamt die gleiche Ausrichtung bzw. den gleichen Winkel bezüglich der Achse B-B' bzw. der Achse A-A' auf und sind nicht gegeneinander verschoben angeordnet.

Das Heizmodul 1 wird vorzugsweise in Verfahren zur Herstellung von Formteilen zum Aufwärmen von Folienelementen eingesetzt, bevor diese beispielsweise durch ein Spritzguss-Verfahren, insbesondere ein Hinterspritz-Verfahren, ein TiefziehVerfahren und/oder einem Heißprägeverfahren weiterverarbeitet werden.

Die Segmentgrößen der Heizsegmente 1a liegen in zumindest einer lateralen Richtung, beispielsweise entlang der durch die Schnitte A-A' und/oder B-B' gekennzeichneten Richtungen, zwischen 50 mm und 2500 mm, insbesondere zwischen 100 mm und 500 mm. Benachbarte der Heizsegmente weisen bevorzugt einen Segmentabstand zwischen 0 mm und 150 mm, insbesondere zwischen 0 mm und 75 mm, zueinander auf.

Es hat sich als vorteilhaft erwiesen, ein oder mehrere der Heizsegmente 1a oder ein oder mehrere der Heizelemente 1b als Laser auszubilden oder in ein oder mehreren Bereichen der Segmentabstände, insbesondere zwischen den Heizsegmenten 1a oder den Heizelementen 1b, ein oder mehrere Laser anzuordnen, welche vorzugsweise wärmeerzeugende Strahlung, insbesondere IR-Strahlung, emittieren.

Vorzugsweise sind ein oder mehrere der Heizelemente 1b von einem Keramik-Heizelement oder einem IR-Heizelement gebildet. Insbesondere ist ein erster Teil der ein oder mehreren Heizelemente 1b jeweils von einem Keramik-Heizelement gebildet und ein zweiter Teil der ein oder mehreren Heizelemente 1b ist jeweils von einem IR-Heizelement gebildet.

Bevorzugt weist das Heizmodul 1 und/oder zumindest eines der zwölf Heizsegmente 1a zumindest einen Sensor 3 zur Messung des Zustandes der Erwärmung des Folienelements auf. Einer oder mehrere der Sensoren 3 sind insbesondere Pyrometer, welches die Temperatur, bevorzugt die Oberflächentemperatur in zumindest einem zugeordneten zweiten Bereich des jeweiligen Folienelements 1 misst. Ein oder mehrere der Sensoren 3 sind bevorzugt als Wärmebildkameras ausgebildet.

Die Figur 2 zeigt ein Heizmodul 1 umfassend zwölf Heizsegmente 1a, welche jeweils ein oder mehrere Heizelemente 1b aufweisen und wobei jedes der Heizsegmente 1a einen Sensor 3 umfasst. Die Heizsegmente 1a sind in dem Heizmodul 1 in drei Spalten bezüglich der durch die Achse A-A' gekennzeichneten Richtung und in vier Reihen bezüglich der durch die Achse B-B' gekennzeichneten Richtung angeordnet. Rechts neben dem gezeigten Heizmodul 1 ist ein dritter Querschnitt des Heizmoduls 1 entlang der Achse B-B' gezeigt und unterhalb des gezeigten Heizmoduls 1 ist ein vierter Querschnitt des gezeigten Heizmoduls 1 entlang der Achse A-A' gezeigt.

Der dritte Querschnitt des Heizmoduls 1 umfasst vier Heizsegmente 1a und weist eine Kavität 47 auf. Die vier Heizsegmente 1a sind nicht entlang einer Ebene angeordnet, sondern zwei Heizsegmente 11a, 11d sind jeweils auf einer von zwei Ebenen angeordnet, so dass die Abstände der vier Heizsegmente 1a zu der Kavität der Kontur der Kavität folgen. Hierdurch ist der Mittelwert der Abstände der vier Heizsegmente zu der Kavität kleiner als wenn die vier Heizsegmente 1a entlang einer Ebene angeordnet sind. Das Heizsegment 11d ist gegenüber den Heizsegmenten 11a, 11b und 11c verkippt angeordnet.

Der vierte Querschnitt umfasst sechs Heizsegmente 1a, wobei drei der Heizsegmente einer erste der Ebenen angeordnet sind und drei der Heizsegmente auf einer zweiten der Ebenen angeordnet sind.

Insbesondere sind zumindest zwei oder mehrere der Heizsegmente 1a gegeneinander beweglich, vorzugsweise zumindest einer der durch die Achsen A-A' und B-B' gekennzeichneten Richtungen, beweglich in dem Heizmodul 1 angeordnet.

Vorzugsweise sind ein oder mehrere der Heizsegmente 1a in vertikaler Richtung, insbesondere in einer Richtung senkrecht zu der durch die Achsen A-A` und/oder B-B' gekennzeichneten Richtungen, versetzt in dem Heizmodul 1 angeordnet.

Es hat sich als besonders vorteilhaft erwiesen, das Heizmodul 1 mit einer Stellvorrichtung bereitzustellen, mittels der die relative Lageanordnung, insbesondere die Lageanordnung in vertikaler Richtung, der Heizsegmente 1a zueinander veränderbar ist. Dies ermöglicht beispielsweise die Verringerung zumindest eines Abstandes eines zugeordneten Heizsegments 1a zu einer Kontur.

Vorzugsweise sind ein oder mehrere der Heizsegmente 1a in dem Heizmodul in vertikaler und/oder horizontaler Richtung verschiebbar gelagert, wobei die vertikale Richtung senkrecht auf der durch das Heizmodul 1 aufgespannten Ebene steht und die horizontale Richtung in der durch das Heizmodul 1 aufgespannten Ebene liegt. Die horizontale Richtung verläuft beispielsweise parallel zu den durch die Achsen A-A' oder B-B' gekennzeichneten Richtungen. Bevorzugt ist die vertikale und/oder die horizontale Position der jeweiligen Heizsegmente 1a oder die Position der Heizsegmente 1a auf zumindest einer der vertikalen und/oder horizontalen Richtungen mittels der Stellvorrichtung anpassbar, insbesondere an die Kontur des Folienelements 2 einstellbar oder anpassbar. Insbesondere ist der Kippwinkel von ein oder mehreren Heizsegmenten 1a bezüglich einer Achse, vorzugsweise bezüglich einer der vertikalen und/oder horizontalen Achsen, mittels der Stellvorrichtung anpassbar oder einstellbar.

Die Stellvorrichtung weist vorzugsweise einen oder mehrere Stellmotoren und/oder ein oder mehrere pneumatische und/oder hydraulische Aktoren auf, mittels welchen die relative Lageanordnung zwei oder mehrerer der Heizsegmente 1a zueinander veränderbar ist.

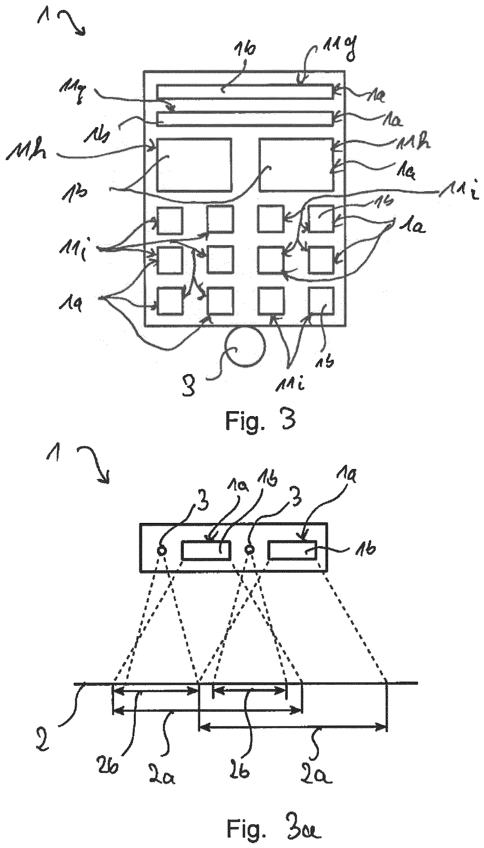

Die Figur 3 zeigt die ein Heizmodul 1 umfassend sechszehn Heizsegmente 1a in Aufsicht, welche jeweils zumindest ein Heizelement 1b aufweisen. Die jeweils zwei Heizsegmente 11g und 11h weisen eine in der durch das Heizmodul aufgespannten Ebene liegende rechteckige Form auf. Hierbei sind die zwei Heizsegmente 11g in einer Spalte und zwei Zeilen angeordnet und die zwei Heizsegmente 11h sind in einer Zeile und zwei Spalten angeordnet. Die zwölf Heizsegmente 11i sind in vier Spalten und drei Zeilen angeordnet.

Vorzugsweise weisen ein oder mehrere der Heizsegmente 1a jeweils zumindest einem Heizelement auf.

Das Heizmodul 1 weist einen Sensor 3b auf, welcher mit oder ohne Abstand neben dem Heizmodul angeordnet ist. Der Sensor 3b ist insbesondere als Wärmebildkamera ausgebildet.

Die Figur 3a zeigt einen Querschnitt eines Heizmoduls 1 umfassend zwei Heizsegmente 1a und zwei Sensoren 3 sowie ein Folienelement 2. Den Heizsegmenten 1a ist jeweils ein erster Bereich 2a des Folienelements 2 zugeordnet und den Sensoren 3 ist jeweils ein zweiter Bereich 2b des Folienelements 2 zugeordnet.

Es hat sich als besonders vorteilhaft erwiesen, dass die ein oder mehreren Sensoren 3 den Zustand der Erwärmung, insbesondere die Oberflächentemperaturen, des Folienelements 2 insbesondere berührungslos in den ein oder mehreren zugeordneten zweiten Bereichen 2a des Folienelements 2 erfassen, da das Folienelement 2 bei einer nicht berührungsfreien Temperaturmessung beispielsweise durch kurzzeitige Haftungen und/oder Verklebungen mit berührenden Sensoren beschädigt werden kann.

Vorzugsweise überlappen ein oder mehrere der zweiten Bereiche 2b des Folienelements 2, in welchen ein oder mehrere der den zweiten Bereichen zugeordnete Sensoren 3 den Zustand der Erwärmung, insbesondere die Oberflächentemperatur des Folienelements 2 erfassen, zumindest teilweise mit den dem jeweiligen Heizsegment 1a zugeordneten ersten Bereich 2a des Folienelements 2.

Bevorzugt sind ein oder mehrere der zweiten Bereich 2b oder zumindest einer der zweiten Bereiche 2b des Folienelements 2, in welchem die ein oder mehreren

Sensoren 3 den Zustand der Erwärmung des Folienelements 2 erfassen, innerhalb des dem jeweiligen Heizsegment 1a zugeordneten ersten Bereichs 2a des Folienelements 2 angeordnet.

Besonders bevorzugt erfassen die ein oder mehreren Sensoren 3 den Zustand der Erwärmung des Folienelements 2 in zwei oder mehreren zweiten Bereichen 2b des Folienelements 2 und die zweiten Bereiche 2b überlappen jeweils zumindest teilweise einen der ein oder mehreren ersten Bereiche 2a.

Es hat sich als vorteilhaft erwiesen, dass zumindest einer der Sensoren 3 als eine Wärmebildkamera ausgebildet ist, welche den Zustand der Erwärmung des Folienelements 2 in einer Vielzahl von zweiten Bereichen 2b des Folienelements 2 berührungslos erfasst. Hierbei erfasst die Wärmebildkamera insbesondere den gesamten Bereich des Folienelements 2.

Es hat sich als besonders vorteilhaft erwiesen, zumindest eine Wärmebildkamera und zumindest ein Pyrometer zur Messung der Temperatur, insbesondere der Oberflächentemperatur, in einem oder mehreren zweiten Bereichen 2b des Folienelements 2 oder zu Messung der Temperaturverteilungen, insbesondere der Oberflächentemperaturverteilungen, in einem oder mehreren zweiten Bereichen 2b des Folienelements 2 zu bestimmen. Mittels des Pyrometers kann beispielsweise die Oberflächentemperatur eines zugeordneten zweiten Bereichs 2b erfasst werden und gleichzeitig kann mittels der Wärmebildkamera die Oberflächentemperatur des gesamten Folienelements 2, insbesondere umfassend den zweiten zugeordneten Bereich 2b, erfasst werden, so dass zwei Messkanäle für die Oberflächentemperatur zur Verfügung stehen.

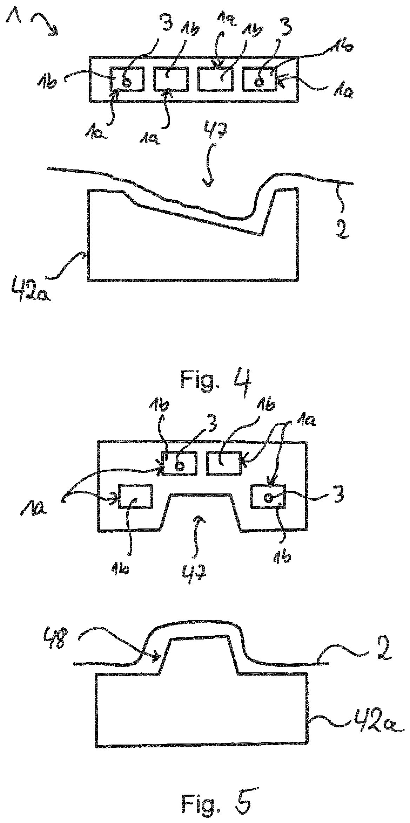

Die Figur 4 zeigt einen Querschnitt einer Vorrichtung umfassend ein Heizmodul 1 und eine erste Werkzeughälfte 42a, wobei die erste Werkzeughälfte 42a eine Kavität 47 aufweist. Zwischen dem Heizmodul 1 und der ersten Werkzeughälfte 42a ist ein Folienelement 2 angeordnet. Das Folienelement 2 folgt der Kontur der 47. Das Heizmodul 1 umfasst vier Heizsegmente 1a, wobei zwei der Heizsegmente 11j jeweils einen Sensor 3, insbesondere zumindest ein Pyrometer, bevorzugt eine Wärmebildkamera, aufweisen.

Die Figur 5 zeigt einen Querschnitt einer Vorrichtung umfassend ein Heizmodul 1 und eine erste Werkzeughälfte 42a, wobei das Heizmodul 1 eine Kavität 47 aufweist und wobei die erste Werkzeughälfte 42a einen Stempel 48 oder eine Patrize 48 aufweist. Zwischen dem Heizmodul 1 und der ersten Werkzeughälfte 42a ist ein Folienelement 2 angeordnet. Das Heizmodul 1 weist vier Heizsegmente 11k, 11l, 11m, 11n auf, wobei zwei der Heizsegmente 11l und 11n einen Sensor 3, insbesondere ein Pyrometer, bevorzugt eine Wärmebildkamera, aufweisen. Zwei der Heizsegmente 11k und 11n sind gegenüber den restlichen zwei Heizsegmenten 11l und 11m derart versetzt, dass alle der Heizsegmente 11k, 11l, 11n, 11m einen innerhalb einer Toleranz gleichen Anstand zu der die Patrize 48 umfassenden ersten Werkzeughälfte 42a aufweisen. Die Anordnung der Heizsegmente 11k, 11l, 11n, 11m folgt vorzugsweise der Kontur der Patrize 48.

Vorzugsweise sind die Kontur der Patrize 48 der ersten Werkzeughälfte 42a und die Kontur der Kavität 42a des Heizmoduls 1 derart ausgebildet, dass beide Konturen insbesondere komplementär zueinander sind.

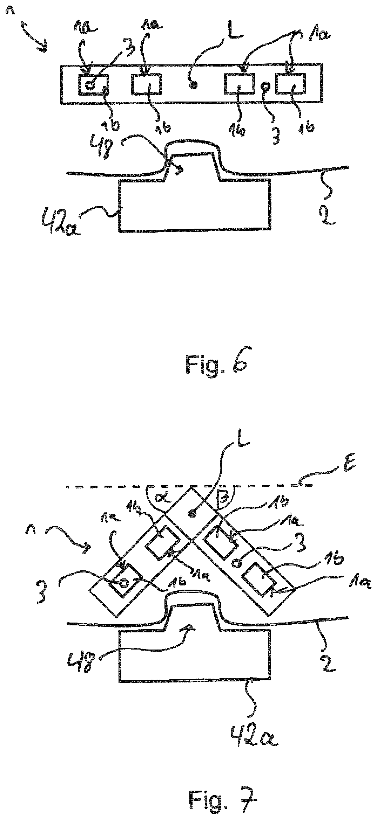

Die Figur 6 zeigt einen Querschnitt einer Vorrichtung umfassend eine erste Werkzeughälfte 42a und ein Heizmodul 1, wobei die erste Werkzeughälfte 42a eine Patrize 48 aufweist und wobei das Heizmodul 1 zwei Heizsegmente 1a mit jeweils einem Sensor 3, insbesondere jeweils einem Pyrometer, vorzugsweise jeweils einer Wärmebildkamera, aufweist. Zwischen der ersten Werkzeughälfte 42a und dem Heizmodul 1 ist ein Folienelement 2 angeordnet, welches der Kontur der Patrize 48 folgt. Das Heizmodul 1 umfasst zwei Flügel 12a und 12b, welche jeweils einen Sensor 3 aufweisen, wobei die Flügel 12a, 12b drehbar um eine Achse L gelagert sind.

Bevorzugt weist jeder der Flügel 12a, 12b vorzugsweise zumindest einen Sensor 3 auf.

Die Figur 7 zeigt den in der Figur 6 gezeigten Querschnitt einer Vorrichtung, bis auf, dass der Flügel 12a mit dem Winkel α um die Achse L gegenüber der Lage des in der Figur 6 gezeigten Flügels 12a in Richtung der ersten Werkzeughälfte 42a gedreht ist und der Flügel 12b mit dem Winkel β um die Achse L gegenüber der Lage des in der Figur 6 gezeigten Flügels 12b in Richtung der ersten Werkzeughälfte 42a, insbesondere der Referenzebene E, gedreht ist. Die Winkel α, β sind vorzugsweise gleich oder unterschiedlich.

Vorteilhafterweise verringern sich die jeweiligen Abstände der Heizsegmente 1a durch die Drehung der Flügel 12a, 12b, da sich die Flügel 12a, 12b des Heizmoduls 1 hierbei der Kontur der Patrize 48 der ersten Werkzeughälfte 42a annähern und/oder hierdurch der Form der Patrize 48 der ersten Werkzeughälfte 42a folgen.

Insbesondere weist die erste Werkzeughälfte 42a an Stelle der Patrize 48 eine Kavität 47 oder zumindest eine Kavität 47 und/oder zumindest eine Patrize 48 auf.

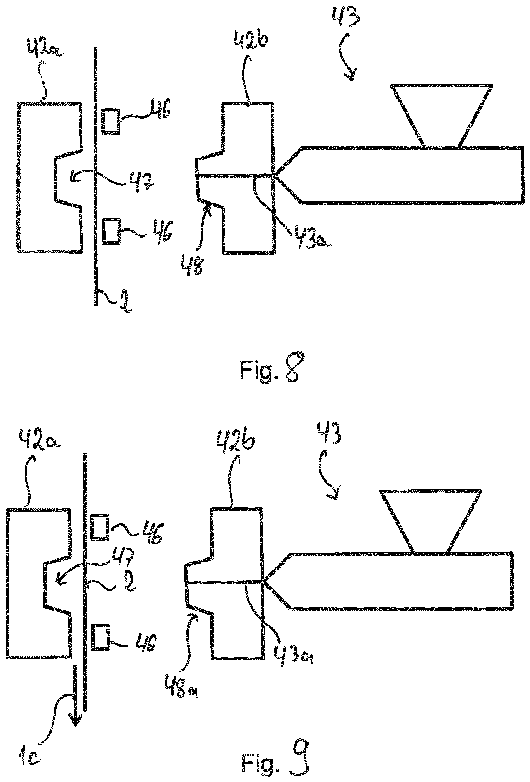

Die Figuren 8 bis 17 zeigen jeweils eine Vorrichtung zur Herstellung eines Formteils in Zuständen die unterschiedlichen Verfahrensschritten eines Verfahrens zur Herstellung eines Formteils entsprechen.

Die Vorrichtung zur Herstellung eines Formteils weist ein Heizmodul 1 und ein Formwerkzeug zur Verformung des zumindest einen durch das Heizmodul 1 erwärmten Folienelements 2 auf. Die Verformung des erwärmten Folienelements 2 erfolgt insbesondere mittels Tiefziehen, Hinterspritzen und/oder durch Anlegung eines Druckgefälles zwischen der Vorderseite und er Rückseite oder zwischen einer ersten Seite und einer zweiten Seite des Folienelements 2. Das Formwerkzeug stellt das Formteil bereit.

Das Formwerkzeug weist vorzugsweise zwei Werkzeughälften auf, zwischen denen das Folienelement 2 anordenbar ist. Das Folienelement 2 ist bevorzugt derart in der oberen und/oder der unteren oder der ersten und/oder der zweiten Werkzeughälfte angeordnet, dass nach dem Schließen der Werkzeughälften das Folienelement mittels des Heizmoduls 1 erwärmbar ist. Das Formwerkzeug weist insbesondere Mittel zur Anlegung eines Druckgefälles zwischen der Vorderseite und der Rückseite oder der ersten Seite und der zweiten Seite des Folienelements 2 auf, derart, dass das Folienelement 2 durch Druckgefälle zwischen der Vorderseite und der Rückseite des Folienelements 2 oder der ersten und der zweiten Seite des Folienelements 2 zur Ausbildung eines Formteils verformt wird.

Weiter weist die Vorrichtung zur Herstellung eines Formteils vorzugsweise eine Formstation auf, welche das Formwerkzeug umfasst. Die Vorrichtung weist insbesondere einen Schlitten zur Aufnahme des Folienelements 2 auf. Bevorzugt umfasst die Vorrichtung eine Transportvorrichtung zum Transport des Folienelements 2 mittels des Schlittens zu dem Heizmodul 1 und zu der Formstation auf.

Weiter weist das Formwerkzeug bevorzugt eine erste und eine zweite Werkzeughälfte 42a, 42b auf, wobei insbesondere zwischen der ersten und der zweiten Werkzeughälfte 42a, 42b das Folienelement 2 anordenbar ist. Das Formwerkzeug weist vorzugsweise eine Klemmvorrichtung zum Festklemmen des Folienelements 2 auf. Das Heizmodul 1 der Vorrichtung ist insbesondere derart beweglich gelagert, dass das Heizmodul 1 zwischen das Folienelement 2 und der ersten Werkzeughälfte 42a oder der zweiten Werkzeughälfte 42b einfahrbar ist und vor Schließen der Werkzeughälften 42a, 42b herausfahrbar ist. Die erste und/oder die zweite Werkzeughälfte weisen vorzugsweise zumindest einen Einspritzkanal zum Einspritzen einer Materialschmelze auf.

Die Figur 8 zeigt eine Vorrichtung zur Herstellung eines Formteils umfassend ein Formwerkzeug, welches eine erste Werkzeughälfte 42a umfassend eine Kavität 47 und eine zweite Werkzeughälfte 42b umfassend eine Patrize 48 aufweist, wobei die Kontur der Kavität 47 und die Kontur der Patrize 48 bis auf vorbestimmte Unterschiede und/oder Toleranzen komplementär zueinander sind. Zwischen der ersten Werkzeughälfte 47 und der zweiten Werkzeughälfte 48 ist ein Folienelement 2 und eine Klemmvorrichtung 46 angeordnet. Die zweite Werkzeughälfte weist einen Einspritzkanal 43a auf, durch welchen bevorzugt Materialschmelze aus der Einspritzvorrichtung 43 durchgepresst wird.

Die Klemmvorrichtung 46 klemmt das Folienelement 2 vorzugsweise an die erste Werkzeughälfte 42a. Insbesondere klemmt die Klemmvorrichtung 46 das Folienelement 2 an die zweite Werkzeughälfte 42b.

Die Figur 9 zeigt das Einfahren des Folienelements 2 entlang der Richtung 1c, welche in der durch das Folienelement 2 aufgespannten Ebene liegt, in die in der Figur 8 gezeigten Vorrichtung zur Herstellung eines Formteils. Das Folienelement 2 berührt weder die Klemmvorrichtung 46 noch die erste oder die zweite Werkzeughälfte 42a, 42b. Die erste Werkzeughälfte 42a und die zweite Werkzeughälfte 42b berühren sich nicht.

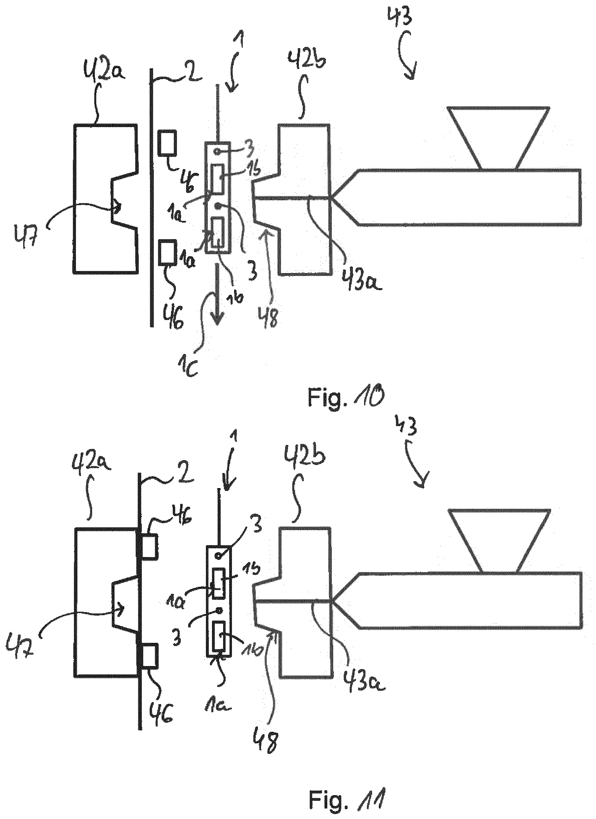

Die Figur 10 zeigt die in der Figur 9 gezeigte Vorrichtung zur Herstellung eines Formteils, bis auf, das ein Heizmodul 1 zwischen das Folienelement 2 und die zweite Werkzeughälfte 42b sowie die Klemmvorrichtung 46 und die zweite Werkzeughälfte 42b eingefahren wird. Die Bewegungsrichtung 1c des Heizmoduls 1 verläuft vorzugsweise parallel zu der von dem Folienelement 2 aufgespannten Ebene. Das Heizmodul 1 umfasst drei Heizelemente 1a, welche jeweils zumindest einen oder mehrere Heizelemente 1b aufweisen, sowie vier Sensoren 3, welche neben und/oder jeweils zwischen den Heizsegmenten 1a angeordnet sind.

Die Figur 11 zeigt die in der Figur 10 gezeigt Vorrichtung zur Herstellung eines Formteils, bis auf, dass die Klemmvorrichtung 46 das Folienelement 2 an die erste Werkzeughälfte 42a klemmt, so dass das Folienelement 2 zwischen der Klemmvorrichtung 46 und der ersten Werkzeughälfte 42a eingeklemmt ist.

Vorzugsweise erwärmt das Heizmodul 1 das eingeklemmte Folienelement 2 auf, wobei jedem der drei Heizsegmente 1a des Heizmoduls 1 insbesondere jeweils ein erster Bereich 2a des Folienelements 2a zugeordnet ist, welcher von dem jeweiligen Heizsegment 1a erwärmt wird.

Einem oder mehreren der vier Sensoren 3 des Heizmoduls 1 werden jeweils einer oder mehrere zweite Bereiche 2b des Folienelements 2 zugeordnet. Vorzugsweise erfassen die den jeweiligen einen oder mehreren zweiten Bereichen 2b jeweils zugeordneten einen oder mehreren Sensoren 3 den Zustand der Erwärmung, insbesondere die Temperatur, bevorzugt die Oberflächentemperatur, der jeweiligen einen oder mehreren zweiten Bereiche 2b des Folienelements 2.

Die jeweilige Heizleistung eines oder mehrerer der Heizsegmente 1a wird insbesondere einzeln festgelegt oder eingestellt, wobei die jeweiligen Heizleistungen der einen oder mehreren Heizsegmente 1a beispielsweise über ein oder mehrere Regelkreise des Zustandes der Erwärmung des Folienelements 2 festgelegt oder eingestellt werden. Die Regelkreise koppeln die Heizleistungen der jeweiligen Heizsegmente 1a dazu bevorzugt an die Messungen der Sensoren 3 bezüglich des Zustands der Erwärmung des Folienelements 2.

Weiter wird die Heizleistung eines oder mehrerer der Heizsegmente 1a bevorzugt basierend auf dem von dem zumindest einen Sensor 3 erfassten Zustand der Erwärmung des Folienelements 2 festgelegt oder eingestellt. Insbesondere werden die Heizleistungen aller Heizsegmente 1a anhand der Messung bzw. der Erfassung des Zustandes der Erwärmung des Folienelements 2 oder eines oder mehrerer zweiter Bereiche 2b des Folienelements 2 eines Sensors 3 eingestellt oder festgelegt, wobei der Sensor 3 beispielsweise als Pyrometer oder als Wärmebildkamera ausgebildet sein kann.

Vorzugsweise wird die Heizleistung zumindest eines der Heizsegmente 1a basierend auf dem von dem zumindest einen Sensor 3 erfassten Zustand der Erwärmung des Folienelements 2, insbesondere in ein oder mehreren der zweiten Bereiche 2b des Folienelements 2, in dem dem Heizsegment 1a zugeordneten ersten Bereich 1a des Folienelements 2 festgelegt oder eingestellt wird. Die Heizleistung zumindest eines der Heizsegmente 1a wird bevorzugt basierend auf dem von dem zumindest einen Sensor 3 erfassten Zustand der Erwärmung des Folienelements 2 in dem einen anderen der Heizsegmente 1a zugeordneten ersten Bereich 2a des Folienelements 2 festgelegt oder eingestellt.

Weiter erfassen eine oder mehrere der Sensoren 3 den Zustand der Erwärmung des Folienelements 2 berührungslos, das heißt ohne mechanischen Kontakt zueinander, in einem oder mehreren zugeordneten zweiten Bereichen 2b des Folienelements 2. Insbesondere wird die Oberflächentemperatur des Folienelements 2 berührungslos in den einem oder mehreren den entsprechenden Sensoren 3 zugeordneten zweiten Bereichen 2b des Folienelements 2 erfasst.

Ferner werden einer oder mehrere der zweiten Bereich 2b des Folienelements 2, in welchen einer oder mehrere der Sensoren 3 den Zustand der Erwärmung erfassen, derart angeordnet, dass die zweiten Bereiche 2b zumindest teilweise zumindest einen der ersten Bereiche 2a überlappen, insbesondere zumindest teilweise innerhalb zumindest einem der ersten Bereiche 2a angeordnet werden.

Es hat sich als besonders vorteilhaft erwiesen, dass das Heizmodul 1 eine Stellvorrichtung aufweist, mittels derer die relative Lage von zwei oder mehreren der Heizsegmente 1a zueinander, insbesondere entlang beliebiger Richtungen, veränderbar ist. Vorzugsweise werden ein oder mehrere der Heizsegmente 1a in dem Heizmodul 1 in vertikaler oder horizontaler Richtung verschiebbar und/oder kippbar gelagert. Die horizontale bzw. vertikale Position eines oder mehrerer der Heizsegmente 1a, insbesondere entlang vorbestimmter Achsen im Raum, wird vorzugsweise mittels der Stellvorrichtung eingestellt. Bevorzugt werden die Kippwinkel eines oder mehrerer der Heizsegmente 1a, insbesondere bezüglich einer vorbestimmten Ebene, mittels der Stellvorrichtung eingestellt, besonders bevorzugt an die Kontur des Folienelements 2 eingestellt.

Vorzugsweise wird die Heizleistung zumindest eines der Heizsegmente 1a basierend auf dem von dem zumindest einen Sensor 3 erfassten Zustand der Erwärmung des Folienelements 2, insbesondere in einem dem Sensor 3 zugeordneten zweiten Bereichs 2b des Folienelements 2, festgelegt oder eingestellt. Zusätzlich oder ausschließlich wird die Heizleistung des Heizsegment 1a durch die Kontur oder die Konturgestaltung des Formteils, insbesondere des durch das Verfahren herzustellenden Formteils bestimmten Soll-Temperaturprofils des Folienelements 2 festgelegt oder eingestellt.

Weiter wird die Heizleistung zumindest eines der Heizsegmente 1a bevorzugt basierend auf dem von dem zumindest einen Sensor 3 erfassten Zustand der Erwärmung des Folienelements 2 sowie Daten über die Kontur des Formteils, insbesondere des durch das Verfahren herzustellenden Formteils, festgelegt oder eingestellt. Die Daten werden beispielsweise bei dem Entwurf des herzustellenden Formteils generiert.

Vorzugsweise wird die Positionierung der Heizsegmente 1a basierend auf Daten, insbesondere vorbestimmten Daten, über die Kontur des Formteils festgelegt oder eingestellt. Eines oder mehrere der Heizsegmente 1a werden beispielsweise derart positioniert, dass der mittlere Abstand der Heizsegmente 1a zu der Kontur des Folienelements 2 minimal wird und/oder keines der Heizsegmente 1a das Folienelement 2 berührt.

Insbesondere umfassen die Daten über die Kontur des Folienelements 2, insbesondere die vorbestimmten Daten über die Kontur des Folienelements 2: Vorliegen und Position von Krümmungen der Kontur, insbesondere der richtungsabhängigen Krümmungen der Kontur, der Krümmungsradius, insbesondere der Krümmungsradius an jedem Punkt der Kontur, die Krümmungsrichtung, die Beabstandung von einer Referenzfläche E und/oder einer Referenzebene, die vertikale und/oder horizontale Beabstandung eines Oberflächenbereichs der Kontur, insbesondere von der Kontur eines oder mehrerer der ersten und/oder zweiten Bereiche 2a, 2b des Folienelements 2, von einem oder mehreren der Heizsegmente 1a, die Positionen und/oder Lagen von einer oder mehreren Ausnehmungen und/oder Durchbrechungen des Formteils, insbesondere des in dem Verfahren herzustellenden Formteils.

Die Beabstandung der ein oder mehreren Heizsegmente 1a beträgt vorzugsweise jeweils zwischen 0 mm und 150 mm, insbesondere zwischen 0 mm und 75 mm. Die Dauer der Erwärmung des Folienelements 2 durch das Heizmodul 1 und/oder einem oder mehreren der Heizsegmente 1a beträgt jeweils zwischen 1 s und 60 s, insbesondere zwischen 5 s und 30 s. Bevorzugt werden das Folienelement 2 oder ein oder mehrere der ersten und/oder zweiten Bereiche 2a, 2b des Folienelements 2 durch die Erwärmung mittels des Heizmoduls 1 auf eine Temperatur zwischen 50°C und 500°C, insbesondere zwischen 100°C und 300°C, erwärmt.

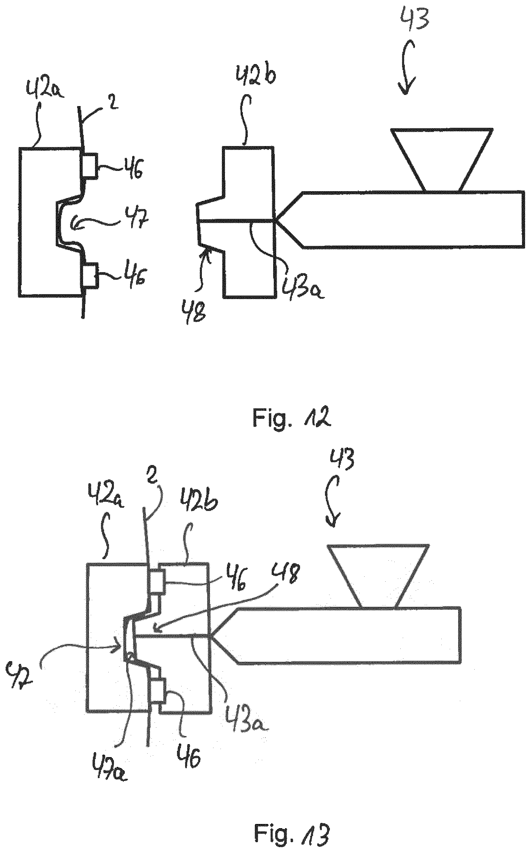

Die Figur 12 zeigt die in der Figur 11 gezeigt Vorrichtung zur Herstellung eines Formteils, bis auf, dass das Heizmodul 1 nicht mehr zwischen dem Folienelement 2 und der zweiten Werkzeughälfte 42b bzw. der Klemmvorrichtung 46 und der zweite Werkzeughälfte 42b eingefahren ist. Das Folienelement 2 liegt durch die Anlegung eines Druckgefälles zwischen der Vorderseite und der Rückseite des erwärmten und geklemmten Folienelements 2 verformt vor. Die Vorderseite des Folienelements 2 zeigt zur zweiten Werkzeughälfte 42b und die Rückseite des Folienelements 2 zeigt zur ersten Werkzeughälfte 42a.

Weiter ist das Folienelement 2 durch die Bereitstellung eines Unterdrucks oder Vakuums zwischen der ersten Werkzeughälfte 42a und dem Folienelement 2 vorzugsweise derart verformt, dass die Form des Folienelements 2 der Kontur der Kavität 47 der ersten Werkzeughälfte folgt.

Es hat sich als vorteilhaft erwiesen, das Folienelement 2 auch während der Verformung mittels des Heizmoduls 1 weiter zu erwärmen.

Die Figur 13 zeigt die in der Figur 12 gezeigt Vorrichtung zur Herstellung eines Formteils, bis auf, dass die erste Werkzeughälfte 42a und die zweite Werkzeughälfte 42b geschlossen sind. Das Folienelement 2 wird hierbei bevorzugt von den Werkzeughälften 42a, 42b eingeschlossen und weist insbesondere eine mögliche maximale Verdehnung auf 110% bis 150%, bevorzugt auf 110% bis 125% auf.

Es hat sich als vorteilhaft erwiesen, wenn die Schließkraft zwischen den Werkzeughälften 42a, 42b zwischen 250 kN und 10000 kN, insbesondere zwischen 500 kN und 5000 kN, liegt.

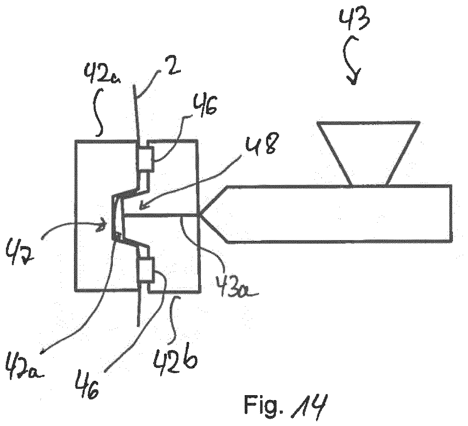

Die Figur 14 zeigt die in der Figur 13 gezeigt Vorrichtung zur Herstellung eines Formteils, bis auf, dass eine Materialschmelze in die verbleibende Kavität 47a zwischen der ersten und der zweiten Werkzeughälfte 42a, 42b durch einen Einspritzkanal 43a, welcher durch die zweite Werkzeughälfte 42b verläuft, eingespritzt wird. Die Einspritzvorrichtung spritzt die Materialschmelze über eine Dauer von 0,5 s bis 100 s, insbesondere von 0,5 s bis 60 s, in die verbleibende Kavität 47a ein, wobei die Materialschmelze vorzugsweise mit einem Druck von 200 bar bis 10000 bar, insbesondere von 200 bar bis 3000 bar, in die verbleibende Kavität gedrückt wird.

Die Aushärtungsdauer der Materialschmelze in der verbleibenden Kavität 47a zu einem Formteil beträgt 1 s bis 300 s, insbesondere 1 s bis 120 s.

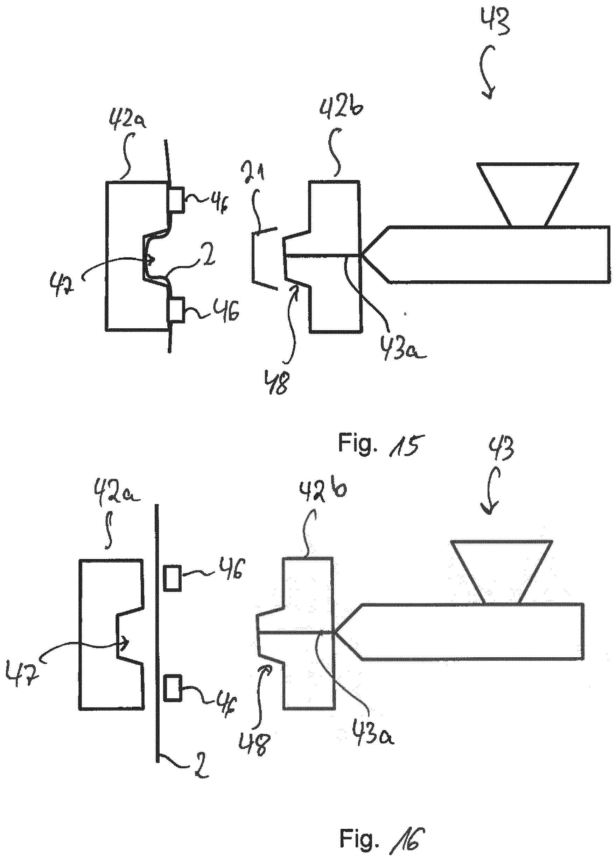

Die Figur 15 zeigt die in der Figur 14 gezeigt Vorrichtung zur Herstellung eines Formteils 21, bis auf, dass die erste Werkzeughälfte 42a und die zweite Werkzeughälfte 42b geöffnet sind. Die Klemmvorrichtung 46 ist geschlossen, wobei die Klemmvorrichtung vorzugsweise 0 s bis 5 s nach der Aushärtung der Materialschmelze geöffnet wird.

Weiter wird das Formteil 21 von dem Folienelement 2 gelöst, wobei von dem Folienelement 2 insbesondere zumindest eine Dekorschicht auf das Formteil 21 übertragen bzw. transferiert wird, und das Formteil 21 aus der Vorrichtung entnommen.

Die Figur 16 zeigt die in der Figur 8 gezeigte Vorrichtung zu Herstellung eines Formteils 21. Die in den Figuren 8 bis 16 gezeigten Verfahrensschritte werden vorzugsweise zyklisch wiederholt, um weitere Formteile 21 herzustellen.

Ein weiteres Ausführungsbeispiel des Verfahrens zur Herstellung eines Formteils umfasst einen oder mehrere der Verfahrensschritte:
- Anordnen des Folienelements 2 zwischen zwei Werkzeughälften 42c, 42d;
- Schließen der Werkzeughälften 42c, 42d;
- Erwärmen des Folienelements 2 mittels des Heizmoduls 1, welches in der unteren und/oder oberen Werkzeughälfte 42c, 42d bzw. der ersten und/oder der zweiten Werkzeughälfte angeordnet ist;
- Verformung des Folienelements 2 durch Anlegen eines Druckgefälles zwischen Vorder- und Rückseite bzw. der ersten und der zweiten Seite des Folienelements 2 zur Ausbildung des Formteils 21, wobei das Druckgefälle zwischen 5 bar und 200 bar, insbesondere zwischen 10 bar und 100 bar, liegt;
- Entnahme des Formteils 21.

Besonders bevorzugt ist hierbei, wenn das Druckgefälle wie folgt gewählt ist: Vakuum zwischen -0,5 bar und -1 bar und/oder Überdruck zwischen +5 bar und +200 bar.

Ein weiteres Ausführungsbeispiel des Verfahrens zur Herstellung eines Formteils umfasst einen oder mehrere der Verfahrensschritte:
- Einlegen des Folienelements 2 in einen Schlitten;
- Transport des Folienelements 2 mittels des Schlittens zu dem Heizmodul 1;
- Erwärmen des Folienelements 2 durch ein oder mehrere in einer Abfolge angeordnete Heizmodule 1;
- Transport des Folienelements 2 mittels des Schlittens zu einer Formstation 4;
- Verformung des Folienelements 2 in der Formstation 4 zur Ausbildung des Formteils 21;
- Entnahme des Formteils 21.

Ein weiteres Ausführungsbeispiel des Verfahrens zur Herstellung eines Formteils umfasst einen oder mehrere der Verfahrensschritte:
- Einlegen des Folienelements 2;
- Verfahren des Heizmoduls 1 derart, dass dieses über oder in einem Abstand von 0 mm und 150 mm, insbesondere zwischen 0 mm und 75 mm, zu dem Folienelement 2 angeordnet ist;
- Erwärmen des Folienelements 2 durch das Heizmodul 1;
- Verformung des Folienelements 2 durch Anlegen eines Druckgefälles zwischen Vorder- und Rückseite 2c, 2d des Folienelements 2 zur Ausbildung des Formteils 21, wobei das Druckgefälle zwischen 5 bar und 200 bar, insbesondere zwischen 10 bar und 100 bar, liegt;
- Entnahme des Formteils 21.

Ein weiteres Ausführungsbeispiel des Verfahrens zur Herstellung eines Formteils umfasst einen oder mehrere der Verfahrensschritte:
- Anordnung des Folienelements 2 zwischen einer ebenen oder eine Kavität 47 und/oder eine Patrize 48 aufweisenden ersten Werkzeughälfte 42a und einer ebenen oder eine Kavität 47 und/oder eine Patrize 48 aufweisenden zweiten Werkzeughälfte 42b;
- Einfahren des Heizmoduls 1 zwischen das Folienelement 2 und der zweiten Werkzeughälfte 42b und Erwärmung des Folienelements 2 durch das Heizmodul 1;
- Optional Klemmen des Folienelements 2 an die erste Werkzeughälfte 42a mittels einer Klemmvorrichtung 46;
- Optional der Kontur der Kavität 47 und/oder der Patrize 48 folgende Verformung des Folienelements 2 durch die Bereitstellung eines Unterdrucks oder Vakuums zwischen der ersten Werkzeughälfte 42a und dem Folienelement 2, wobei der Unterdruck bzw. das Vakuum zwischen - 0,1 bar und -1 bar, insbesondere zwischen -0,5 bar und -1 bar, liegen.
- Herausfahren des Heizmoduls 1;
- Schließen der ersten Werkzeughälfte 42a und der zweiten Werkzeughälfte 42b;
- Einspritzen einer Materialschmelze durch zumindest einen Einspritzkanal 43 in der ersten Werkzeughälfte 42a und/oder der zweiten Werkzeughälfte 42b, wodurch das Formteil 21 ausgebildet wird;
- Öffnen der ersten Werkzeughälfte 42a und zweiten Werkzeughälfte 42b;
- Optional Öffnen der Klemmvorrichtung 46;
- Entnahme des Formteils 21.

Ein weiteres Ausführungsbeispiel des Verfahrens zur Herstellung eines Formteils umfasst einen oder mehrere der Verfahrensschritte:
- Bereitstellung der Kavität 47a zwischen dem Folienelement 2 und der ersten und/oder zweiten Werkzeughälfte 42a, 42b durch das Schließen der ersten Werkzeughälfte 42a und der zweiten Werkzeughälfte 42b.

### Bezugszeichenliste

- 1: Heizmodul
- 1a, 11a, 11b, 11c, 11g, 11h, 11i: Heizsegment
- 1b: Heizelement
- 1c: Erste Bewegungsrichtung
- 1d: Zweite Bewegungsrichtung
- 2: Folienelement
- 2a: Erster Bereich
- 2b: Zweiter Bereich
- 2c: Vorderseite
- 2d: Rückseite
- 21: Formteil
- 3: Sensor
- 3a: Pyrometer
- 3b: Wärmebildkamera
- 4: Formstation
- 41: Formwerkzeug
- 42: Werkzeughälfte
- 42a, 42c: Erste Werkzeughälfte
- 42b, 42d: Zweite Werkzeughälfte
- 43: Einspritzvorrichtung
- 43a: Einspritzkanal
- 44: Transportvorrichtung
- 45: Schlitten
- 46: Klemmvorrichtung
- 47: Kavität
- 47a: Verbleibende Kavität
- 48: Stempel
- L: Achse
- α, β: Winkel
- E: Referenzfläche

## Patentansprüche

1. Heizmodul (1) zur Erwärmung von zumindest einem Folienelement (2), wobei das Heizmodul (1) zwei oder mehrere Heizsegmente (1a) mit jeweils ein oder mehreren Heizelementen (1b) zur Erwärmung eines dem jeweiligen Heizsegment (1b) zugeordneten ersten Bereichs (2a) des Folienelements (2) aufweist, wobei zumindest eines der Heizsegmente (1b) zumindest einen Sensor (3) zur Messung des Zustandes der Erwärmung des Folienelements (2) umfasst, und wobei das Heizmodul (1) eine Stellvorrichtung (11) aufweist, mittels der die relative Lageanordnung von zwei oder mehreren der Heizsegmente (1a) zueinander veränderbar ist, insbesondere wobei die Stellvorrichtung (11) ein oder mehrere elektrische Stellmotoren und/oder ein oder mehrere pneumatische und/oder hydraulische Aktoren aufweisen, mittels denen die relative Lageanordnung von zwei oder mehreren der Heizsegmente (1a) zueinander veränderbar ist.

2. Heizmodul (1) nach Anspruch 1,
**dadurch gekennzeichnet ,**
**dass** der Sensor (3) oder zumindest einer der Sensoren (3) den Zustand der Erwärmung des Folienelements (2) berührungslos in ein oder mehreren zugeordneten zweiten Bereichen (2b) des Folienelements (2) erfasst, insbesondere die Oberflächentemperatur des Folienelements (2) in den ein oder mehreren zugeordneten zweiten Bereichen (2b) des Folienelements (2) erfasst.

3. Heizmodul (1) nach einem der vorhergehenden Ansprüche,
**dadurch gekennzeichnet ,**
**dass** der Sensor (3) oder zumindest einer der Sensoren (3) ein Pyrometer (3a) ist, welcher den Zustand der Erwärmung des Folienelements (2) berührungslos in
einem zugeordneten zweiten Bereich (2b) des Folienelements (2) erfasst, insbesondere die Oberflächentemperatur des Folienelements (2) in dem zugeordneten zweiten Bereichs (2b) des Folienelements (2) erfasst.

4. Heizmodul (1) nach einem der vorhergehenden Ansprüche,
**dadurch gekennzeichnet ,**
**dass** der Sensor (3) oder zumindest einer der Sensoren (3) den Zustand der Erwärmung des Folienelements (2) in einem zugeordneten zweiten Bereich (2b) des Folienelements (2) erfasst
und/oder dass ein oder mehrere der Heizsegmente (1a) jeweils den Sensor (3) oder zumindest einen der Sensoren (3) umfassen und dass der zweite Bereich (2b) oder zumindest einer der zweiten Bereiche (2b) des Folienelements (2), in welchem bzw. in welchen der Sensor (3) bzw. die Sensoren (3) den Zustand der Erwärmung des Folienelements (2) erfassen, zumindest teilweise den dem jeweiligen Heizsegment (1a) zugeordneten ersten Bereich des Folienelements (2) überlappen
und/oder dass der zweite Bereich (2b) oder zumindest einer der zweiten Bereiche (2b) des Folienelements (2), in welchem bzw. in welchen der Sensor (3) bzw. die Sensoren (3) den Zustand der Erwärmung des Folienelements (2) erfassen, innerhalb des dem jeweiligen Heizsegment (1a) zugeordneten ersten Bereichs (1a) des Folienelements (2) angeordnet ist bzw. sind.

5. Heizmodul (1) nach einem der vorhergehenden Ansprüche,
**dadurch gekennzeichnet ,**
**dass** der Sensor (3) oder zumindest einer der Sensoren (3) eine Wärmebildkamera (3b) ist, welche den Zustand der Erwärmung des Folienelements (2) in einer Vielzahl von zweiten Bereichen (2b) des Folienelements (2) berührungslos erfasst,
und/oder dass der Sensor (3) oder einer der Sensoren (3) den Zustand der Erwärmung des Folienelements (2) in zwei oder mehreren zweiten Bereichen (2b) des Folienelements (2) erfasst und dass die zweiten Bereiche (2b) jeweils zumindest teilweise einen der ersten Bereiche (2a) überlappen.

6. Heizmodul (1) nach einem der vorhergehenden Ansprüche,
**dadurch gekennzeichnet ,**
**dass** zumindest zwei der zwei oder mehreren Heizsegmente (1a) gegeneinander beweglich in dem Heizmodul (1) angeordnet sind,
und/oder dass ein oder mehrere der Heizsegmente (1a) in dem Heizmodul (1) in vertikaler oder horizontaler Richtung verschiebbar gelagert sind und/oder ein oder mehrere der Heizsegmente (1a) in dem Heizmodul (1) kippbar gelagert sind, und dass die horizontale bzw. vertikale Position und/oder der Kippwinkel mittels der Stellvorrichtung (11) einstellbar ist, insbesondere an die Kontur des Folienelements (2) anpassbar ist.

7. Heizmodul (1) nach einem der vorhergehenden Ansprüche,
**dadurch gekennzeichnet ,**
**dass** ein oder mehrere der Heizsegmente (1a) eine Segmentgröße in zumindest einer der lateralen Richtungen zwischen 50 mm und 2500 mm, vorzugsweise zwischen 100 mm und 500 mm, aufweist und/oder
**dass** benachbarte der Heizsegmente (1a) einen Segmentabstand zwischen 0 mm und 150 mm, insbesondere zwischen 0 mm und 75 mm, aufweisen und/oder dass zwei oder mehrere Heizsegmente (1a) in vertikaler Richtung gegeneinander versetzt in dem Heizmodul (1) angeordnet sind.

8. Vorrichtung zur Herstellung eines Formteils (21),
**dadurch gekennzeichnet ,**
**dass** die Vorrichtung ein Heizmodul (1) nach einem der Ansprüche 1 bis 7 und eine Formwerkzeug (41) zur Verformung des zumindest einen durch das Heizmodul (1) erwärmten Folienelements (2), insbesondere mittels Tiefziehen, Hinterspritzen und/oder durch Anlegung eines Druckgefälles zwischen Vorderund Rückseite (2c, 2d) des Folienelements (2), zur Ausbildung des Formteils (21) aufweist.

9. Vorrichtung nach Anspruch 8,
**dadurch gekennzeichnet ,**
**dass** das Formwerkzeug (41) zwei Werkzeughälften (42c, 42d) aufweist, zwischen denen das Folienelement (2) anordenbar ist, dass das Heizmodul (1) in der unteren und/oder oberen Werkzeughälfte (42c, 42d) angeordnet ist, derart,
**dass** nach Schließen der Werkzeughälften (42c, 42d) das Folienelement mittels des Heizmoduls (1) erwärmbar ist, dass das Formwerkzeug (41) Mittel zur Anlegung eines Druckgefälles zwischen Vorder- und Rückseite (2c, 2d) des Folienelements (2) aufweist, derart, dass durch das Druckgefälle zwischen Vorder- und Rückseite (2c, 2d) des Folienelements (2) das Folienelement (2) zur Ausbildung des Formteils (21) verformt wird.

10. Vorrichtung nach Anspruch 8 oder 9,
**dadurch gekennzeichnet,**
**dass** die Vorrichtung eine Formstation (4) aufweist, welche das Formwerkzeug (41) umfasst, dass die Vorrichtung einen Schlitten (45) zur Aufnahme des Folienelements (2) aufweist, dass die Vorrichtung eine Transportvorrichtung (44) zum Transport des Folienelements (2) mittels des Schlittens (45) zu dem Heizmodul (2) und zu der Formstation (4) aufweist.

11. Vorrichtung nach einem der Ansprüche 8 bis 10,
**dadurch gekennzeichnet ,**
**dass** das Formwerkzeug (41) eine erste Werkzeughälfte (42a) aufweist und eine zweite Werkzeughälfte (42b) aufweist, wobei zwischen der ersten Werkzeughälfte (42a) und der zweiten Werkzeughälfte (42b) das Folienelement (2) anordenbar ist, dass das Formwerkzeug (41) optional eine Klemmvorrichtung (46) zum Festklemmen des Folienelements (2) aufweist, dass das Heizmodul (1) beweglich gelagert ist, derart, dass das Heizmodul (1) zwischen das Folienelement (2) und der zweiten Werkzeughälfte (42b) einfahrbar und vor Schließen der Werkzeughälften (42a, 42b) herausfahrbar ist, und dass die erste und/oder die zweite Werkzeughälfte (42a, 42b) zumindest einen Einspritzkanal (43) zum Einspritzen einer Materialschmelze aufweist.

12. Verfahren zur Herstellung eines Formteils (21),
**dadurch gekennzeichnet ,**
**dass** ein Folienelement (2) mittels eines Heizmoduls (1) nach Anspruch 1 erwärmt wird, welches zwei oder mehrere Heizsegmente (1a) mit jeweils ein oder mehreren Heizelementen (1b) zur Erwärmung eines dem jeweiligen Heizsegment (1a) zugeordneten ersten Bereichs (2a) des Folienelements (2) aufweist, wobei das Heizmodul (1) und/oder zumindest eines der Heizsegmente (1a) zumindest einen Sensor (3) zur Messung des Zustandes der Erwärmung des Folienelements (2) umfasst, und dass das Folienelement (2) zur Ausbildung des Formteils (21) verformt wird, insbesondere mittels Hinterspritzen, Tiefziehen und/oder Aufbau eines Druckgefälles zwischen Vorder- und Rückseite (2c, 2d) des Folienelements (2).

13. Verfahren nach Anspruch 12,
**dadurch gekennzeichnet ,**
**dass** die Heizleistung der zwei oder mehreren Heizsegmente (1a) jeweils einzeln festgelegt oder eingestellt wird
und/oder dass die Heizleistung zumindest eines der Heizsegmente (1a) basierend auf dem von dem zumindest einem Sensor (3) erfassten Zustand der Erwärmung des Folienelements (2) festgelegt oder eingestellt wird und/oder dass die Heizleistung zumindest eines der Heizsegmente (1a) basierend auf dem von dem zumindest einem Sensor (3) erfassten Zustand der Erwärmung des Folienelements (2) sowie einem vordefinierten, von der Konturgestaltung des Formteils (21) bestimmten Soll-Temperaturprofils des Folienelements (2) festgelegt oder eingestellt wird.

14. Verfahren nach einem der Ansprüche 12 oder 13,
**dadurch gekennzeichnet ,**
**dass** die Heizleistung zumindest eines der Heizsegmente (1a) basierend auf dem von dem zumindest einem Sensor (3) erfassten Zustand der Erwärmung des Folienelements (2) sowie Daten über die Kontur des Formteils (21) festgelegt oder eingestellt wird
und/oder dass die Positionierung der Heizsegmente (1a) basierend auf Daten über die Kontur des Formteils (21) festgelegt wird oder eingestellt wird und/oder dass die Daten über die Kontur des Folienelements (2) ein oder mehrere der folgenden Daten umfassen: Vorliegen und Position von Krümmungen der Kontur, Krümmungsradius, Krümmungsrichtung, Beabstandung von einer Referenzfläche, insbesondere Referenzebene, vertikale oder horizontale Beabstandung eines Oberflächenbereichs der Kontur von einem oder mehreren der Heizsegmente (1a), Position von Ausnehmungen und/oder Durchbrechungen des Formteils (21).

15. Verfahren nach einem der Ansprüche 12 bis 14,
**dadurch gekennzeichnet ,**
**dass** die Heizleistung zumindest eines der Heizsegmente (1a) basierend auf dem von dem zumindest einem Sensor (3) erfassten Zustand der Erwärmung des Folienelements (2) in dem dem Heizsegment (1a) zugeordneten ersten Bereich (2a) des Folienelements (2) festgelegt oder eingestellt wird und/oder dass die Heizleistung zumindest eines der Heizsegmente (1a) basierend auf dem von dem zumindest einem Sensor (3) erfassten Zustand der Erwärmung des Folienelements (2) in dem einem anderen der Heizsegmente (1a) zugeordneten ersten Bereich (2a) des Folienelements (2) festgelegt oder eingestellt wird.

16. Verfahren nach einem der Ansprüche 12 bis 15,
**dadurch gekennzeichnet ,**
**dass** der Sensor (3) oder zumindest einer der Sensoren (3) den Zustand der Erwärmung des Folienelements (2) berührungslos in ein oder mehreren zugeordneten zweiten Bereichen (2b) des Folienelements (2) erfasst, insbesondere die Oberflächentemperatur des Folienelements (2) in den ein oder mehreren zugeordneten zweiten Bereichen (2b) des Folienelements (2) erfasst, und/oder dass der zweite Bereich (2b) oder zumindest einer der zweiten Bereiche (2b) des Folienelements (2), in welchem bzw. in welchen der Sensor (3) bzw. die Sensoren (3) den Zustand der Erwärmung des Folienelements (2) erfassen, zumindest teilweise einen der ersten Bereiche (2a) des Folienelements (2) überlappt, insbesondere innerhalb des ersten Bereichs (2a) des Folienelements (2) angeordnet ist.

17. Verfahren nach einem der Ansprüche 12 bis 16,
**dadurch gekennzeichnet ,**
**dass** mittels einer Stellvorrichtung (11) des Heizmoduls (1) die relative Lageanordnung von zwei oder mehreren der Heizsegmente (1a) zueinander festgelegt oder eingestellt wird
und/oder dass die horizontale bzw. vertikale Position von einem oder mehreren der Heizsegmente (1a), welche in dem Heizmodul (1) in vertikaler oder horizontaler Richtung verschiebbar gelagert sind, mittels der Stellvorrichtung festgelegt oder eingestellt wird, und/oder der Kippwinkel von einem oder mehreren der Heizsegmente (1a), welche in dem Heizmodul (1) kippbar gelagert sind, mittels der Stellvorrichtung (11) festgelegt oder eingestellt wird, insbesondere an die Kontur des Folienelements (2) angepasst wird.

18. Verfahren nach einem der Ansprüche 12 bis 17,
**dadurch gekennzeichnet,**
**dass** das Verfahren die Schritte umfasst:
• Anordnen des Folienelements (2) zwischen zwei Werkzeughälften (42c, 42d);
• Schließen der Werkzeughälften (42c, 42d);
• Erwärmen des Folienelements (2) mittels des Heizmoduls (1), welches in der unteren und/oder oberen Werkzeughälfte (42c, 42d) angeordnet ist;
• Verformung des Folienelements (2) durch Anlegen eines Druckgefälles zwischen Vorder- und Rückseite (2c, 2d) des Folienelements (2) zur Ausbildung des Formteils (21);
• Entnahme des Formteils (21).

## Claims

1. Heating module (1) for heating at least one film element (2), wherein the heating module (1) has two or more heating segments (1a) each having one or more heating elements (1b) for heating a first region (2a) of the film element (2) associated with the respective heating segment (1b), wherein at least one of the heating segments (1b) comprises at least one sensor (3) for measuring the state of the heating of the film element (2), and wherein the heating module (1) has a setting device (11), by means of which the relative positional arrangement of two or more of the heating segments (1a) compared to each other can be changed, in particular wherein the setting device (11) has one or more electrical servo motors and/or one or more pneumatic and/or hydraulic actuators, by means of which the relative positional arrangement of two or more of the heating segments (1a) compared to each other can be changed.

2. Heating module (1) according to claim 1,
**characterised in that**
the sensor (3) or at least one of the sensors (3) contactlessly records the state of the heating of the film element (2) in one or more associated second regions (2b) of the film element (2), in particular records the surface temperature of the film element (2) in the one or more associated second regions (2b) of the film element (2).

3. Heating module (1) according to one of the preceding claims,
**characterised in that**
the sensor (3) or at least one of the sensors (3) is a pyrometer (3a), which contactlessly records the state of the heating of the film element (2) in an associated second region (2b) of the film element (2), in particular records the surface temperature of the film element (2) in the associated second region (2b) of the film element (2).

4. Heating module (1) according to one of the preceding claims,
**characterised in that**
the sensor (3) or at least one of the sensors (3) records the state of the heating of the film element (2) in an associated second region (2b) of the film element (2),
and/or one or more of the heating segments (1a) each comprise the sensor (3) or at least one of the sensors (3), and the second region (2b) or at least one of the second regions (2b) of the film element (2), in which the sensor (3) or the sensors (3) record the state of the heating of the film element (2), at least partially overlap the first region of the film element (2) associated with the respective heating segment (1a),
and/or the second region (2b) or at least one of the second regions (2b) of the film element (2), in which the sensor (3) or the sensors (3) record the state of the heating of the film element (2), is or are arranged inside the first region (1a) of the film element (2) associated with the respective heating segment (1a).

5. Heating module (1) according to one of the preceding claims,
**characterised in that**
the sensor (3) or at least one of the sensors (3) is a thermal imaging camera (3b), which contactlessly records the state of the heating of the film element (2) in a plurality of second regions (2b) of the film element (2),
and/or the sensor (3) or one of the sensors (3) records the state of the heating of the film element (2) in two or more second regions (2b) of the film element (2), and the second regions (2b) each at least partially overlap one of the first regions (2a).

6. Heating module (1) according to one of the preceding claims,
**characterised in that**
at least two of the two or more heating segments (1a) are arranged moveably against each other in the heating module (1),
and/or one or more of the heating segments (1a) are mounted slidably in the vertical or horizontal direction in the heating module (1) and/or one or more of the heating segments (1a) are mounted tiltably in the heating module (1), and the horizontal or vertical position and/or the tilting angle can be adjusted by means of the setting device (11), in particular can be adjusted to the shape of the film element (2).

7. Heating module (1) according to one of the preceding claims,
**characterised in that**
one or more of the heating segments (1a) has a segment size between 50mm and 2500mm, preferably between 100mm and 500mm, in at least one of the lateral directions and/or
neighbouring heating segments (1a) have a segment spacing between 0mm and 150mm, in particular between 0mm and 75mm, and/or two or more heating segments (1a) are arranged offset compared to each other in the vertical direction in the heating module (1).

8. Device for producing a moulded part (21),
**characterised in that**
the device has a heating module (1) according to one of claims 1 to 7 and a moulding tool (41) for reshaping the at least one film element (2) warmed by the heating module (1), in particular by means of thermoforming, back-injection and/or by applying a pressure gradient between the front and rear sides (2c, 2d) of the film element (2), to form the moulded part (21).

9. Device according to claim 8,
**characterised in that**
the moulding tool (41) has two tool halves (42c, 42d), between which the film element (2) can be arranged, the heating module (1) is arranged in the lower and/or upper tool halves (42c, 42d) such that, after closing the tool halves (42c, 42d), the film element can be heated by means of the heating module (1), the moulding tool (41) has the means for applying a pressure gradient between the front and rear sides (2c, 2d) of the film element (2), such that the film element (2) is reshaped to form the moulded part (21) by means of the pressure gradient between the front and rear sides (2c, 2d) of the film element (2).

10. Device according to claim 8 or 9,
**characterised in that**
the device has a moulding station (4) that comprises the moulding tool (41), the device has a carriage (45) for receiving the film element (2), the device has a transport device (44) for transporting the film element (2) to the heating module (2) and to the moulding station (4) by means of the carriage (45).

11. Device according to one of claims 8 to 10,
**characterised in that**
the moulding tool (41) has a first tool half (42a) and a second tool half (42b), wherein the film element (2) can be arranged between the first tool half (42a) and the second tool half (42b), the moulding tool (41) optionally has a clamping device (46) for clamping the film element (2), the heating module (1) is mounted moveably such that the heating module (1) can be moved in between the film element (2) and the second tool half (42b) and can be moved out before closing the tool halves (42a, 42b), and the first and/or the second tool halves (42a, 42b) have at least one injection channel (43) for injecting a material melt.

12. Method for producing a moulded part (21),
**characterised in that**
a film element (2) is heated by means of a heating module (1) according to claim 1, which has two or more heating segments (1a) each having one or more heating elements (1b) for heating a first region (2a) of the film element (2) associated with the respective heating segment (1a), wherein the heating module (1) and/or at least one of the heating segments (1a) comprises at least one sensor (3) for measuring the state of the heating of the film element (2), and the film element (2) is reshaped to form the moulded part (21), in particular by means of back-injection, thermoforming and/or applying a pressure gradient between the front and rear sides (2c, 2d) of the film element (2).

13. Method according to claim 12,
**characterised in that**
the heating power of the two or more heating segments (1a) is each individually defined or set
and/or the heating power at least of one of the heating segments (1a) is defined or set based on the state of the heating of the film element (2) recorded by the at least one sensor (3), and/or the heating power at least of one of the heating segments (1a) is defined or set based on the state of the heating of the film element (2) recorded by the at least one sensor (3) as well as a predefined, target temperature profile of the film element (2) determined by the shaping of the moulded part (21).

14. Method according to one of claims 12 or 13,
**characterised in that**
the heating power at least of one of the heating segments (1a) is defined or set based on the state of the heating of the film element (2) recorded by the at least one sensor (3), as well as data about the shape of the moulded part (21)
and/or the positioning of the heating segments (1a) is defined or set based on data about the shape of the moulded part (21)
and/or the data about the shape of the film element (2) comprises one or more of the following pieces of data: presence and position of curvatures of the shape, radius of curvature, direction of curvature, distance from a reference surface, in particular reference plane, vertical or horizontal distance of a surface region of the shape from one or more of the heating segments (1a), position of recesses and/or openings of the moulded part (21).

15. Method according to one of claims 12 to 14, **characterised in that**
the heating power at least of one of the heating segments (1a) is defined or set based on the state of the heating of the film element (2) in the first region (2a) of the film element (2) associated with the respective heating segment (1a) recorded by the at least one sensor (3)
and/or the heating power at least of one of the heating segments (1a) is defined or set based on the state of the heating of the film element (2) in the first region (2a) of the film element (2) associated with another of the heating segments (1a) recorded by the at least one sensor (3).

16. Method according to one of claims 12 to 15,
**characterised in that**
the sensor (3) or at least one of the sensors (3) contactlessly records the state of the heating of the film element (2) in one or more associated second regions (2b) of the film element (2), in particular records the surface temperature of the film element (2) in the one or more associated second regions (2b) of the film element (2),
and/or the second region (2b) or at least one of the second regions (2b) of the film element, in which the sensor (3) or the sensors (3) record the state of the heating of the film element (2), at least partially overlaps one of the first regions (2a) of the film element (2), in particular is arranged inside the first region (2a) of the film element (2).

17. Method according to one of claims 12 to 16,
**characterised in that**
the relative positional arrangement of two or more of the heating segments (1a) compared to each other is defined or set by means of a setting device (11) of the heating module (1),
and/or the horizontal or vertical position of one or more of the heating segments (1a), which are mounted slidably in the vertical or horizontal direction in the heating module (1), is defined or set by means of the setting device, and/or the tilting angle of one or more of the heating segments (1a), which are mounted tiltably in the heating module (1), is defined or set by means of the setting device (11), in particular is adjusted to the shape of the film element (2).

18. Method according to one of claims 12 to 17,
**characterised in that**
the method comprises the steps:
• arranging the film element (2) between two tool halves (42c, 42d);
• closing the tool halves (42c, 42d);
• heating the film element (2) by means of the heating module (1), which is arranged in the lower and/or upper tool half (42c, 42d);
• reshaping the film element (2) by applying a pressure gradient between the front and rear sides (2c, 2d) of the film element (2), to form the moulded part (21);
• extracting the moulded part (21).

## Revendications

1. Module de chauffage (1) pour le chauffage d'au moins un élément de film (2), dans lequel le module de chauffage (1) présente deux ou plusieurs segments de chauffage (1a) avec respectivement un ou plusieurs éléments de chauffage (1b) pour le chauffage d'une première zone (2a) associée au segment de chauffage (1b) respectif de l'élément de film (2), dans lequel au moins un des segments de chauffage (1b) comporte au moins un capteur (3) pour la mesure de l'état du chauffage de l'élément de film (2), et dans lequel le module de chauffage (1) présente un dispositif de réglage (11), au moyen duquel l'agencement de position relatif de deux ou plusieurs des segments de chauffage (1a) est variable les uns par rapport aux autres, en particulier dans lequel le dispositif de réglage (11) présente un ou plusieurs servomoteurs électriques et/ou un ou plusieurs actionneurs pneumatiques et/ou hydrauliques, au moyen desquels l'agencement de position relative de deux ou plusieurs des segments de chauffage (1a) est variable les uns par rapport aux autres.

2. Module de chauffage (1) selon la revendication 1,
**caractérisé en ce que**
le capteur (3) ou au moins un des capteurs (3) détecte l'état du chauffage de l'élément de film (2) sans contact dans une ou plusieurs secondes zones (2b) associées de l'élément de film (2), en particulier détecte la température de surface de l'élément de film (2) dans les une ou plusieurs secondes zones (2b) associées de l'élément de film (2).

3. Module de chauffage (1) selon l'une quelconque des revendications précédentes,
**caractérisé en ce que**
le capteur (3) ou au moins un des capteurs (3) est un pyromètre (3a) qui détecte l'état du chauffage de l'élément de film (2) sans contact dans l'une seconde zone associée (2b) de l'élément de film (2), en particulier détecte la température de surface de l'élément de film (2) dans la seconde zone associée (2b) de l'élément de film (2).

4. Module de chauffage (1) selon l'une quelconque des revendications précédentes,
**caractérisé en ce que**
le capteur (3) ou au moins des capteurs (3) détecte l'état du chauffage de l'élément de film (2) dans une seconde zone associée (2b) de l'élément de film (2)
et/ou qu'un ou plusieurs des segments de chauffage (1a) comportent respectivement le capteur (3) ou au moins un des capteurs (3) et que la seconde zone (2b) ou au moins une des secondes zones (2b) de l'élément de film (2), dans laquelle ou dans lesquelles le capteur (3) ou les capteurs (3) détectent l'état du chauffage de l'élément de film (2), chevauchent au moins partiellement la première zone associée au segment de chauffage (1a) respectif de l'élément de film (2)
et/ou que la seconde zone (2b) ou au moins une des secondes zones (2b) de l'élément de film (2), dans laquelle ou dans lesquelles le capteur (3) ou les capteurs (3) détectent l'état du chauffage de l'élément de film (2), est ou sont agencées à l'intérieur de la première zone (1a) associée au segment de chauffage (1a) respectif de l'élément de film (2).

5. Module de chauffage (1) selon l'une quelconque des revendications précédentes,
**caractérisé en ce que**
le capteur (3) ou au moins des capteurs (3) est une caméra d'image thermique (3b) qui détecte sans contact l'état du chauffage de l'élément de film (2) dans une pluralité de secondes zones (2b) de l'élément de film (2),
et/ou que le capteur (3) ou un des capteurs (3) détecte l'état du chauffage de l'élément de film (2) dans deux ou plusieurs secondes zones (2b) de l'élément de film (2) et que les secondes zones (2b) chevauchent respectivement au moins partiellement une des premières zones (2a).

6. Module de chauffage (1) selon l'une quelconque des revendications précédentes,
**caractérisé en ce que**
au moins deux des deux ou plusieurs segments de chauffage (1a) sont agencés de manière mobile l'un contre l'autre dans le module de chauffage (1),
et/ou qu'un ou plusieurs des segments de chauffage (1a) sont logés de manière coulissante dans le module de chauffage (1) dans le sens vertical ou horizontal et/ou un ou plusieurs des segments de chauffage (1a) sont logés de manière basculable dans le module de chauffage (1), et que la position horizontale ou verticale et/ou l'angle de basculement est réglable au moyen du dispositif de réglage (11), en particulier peut être adapté au contour de l'élément de film (2).

7. Module de chauffage (1) selon l'une quelconque des revendications précédentes,
**caractérisé en ce que**
un ou plusieurs des segments de chauffage (1a) présente une grandeur de segment dans au moins un des sens latéraux entre 50 mm et 2500 mm, de préférence entre 100 mm et 500 mm, et/ou
que des segments contigus parmi les segments de chauffage (1a) présentent une distance de segment entre 0 mm et 150 mm, en particulier entre 0 mm et 75 mm, et/ou
que deux ou plusieurs segments de chauffage (1a) sont agencés en déport l'un contre l'autre dans le sens vertical dans le module de chauffage (1).

8. Dispositif de fabrication d'une pièce moulée (21),
**caractérisé en ce que**
le dispositif présente un module de chauffage (1) selon l'une quelconque des revendications 1 à 7 et un outil de formage (41) pour la déformation d'au moins un élément de film (2) chauffé par le module de chauffage (1), en particulier par emboutissage profond, pulvérisation par l'arrière et/ou par application d'une chute de pression entre le côté avant et le côté arrière (2c, 2d) de l'élément de film (2), pour la réalisation de la pièce moulée (21).

9. Dispositif selon la revendication 8,
**caractérisé en ce que**
l'outil de formage (41) présente deux moitiés d'outil (42a, 42d), entre lesquelles l'élément de film (2) peut être agencé, que le module de chauffage (1) est agencé dans la moitié d'outil inférieure et/ou supérieure (42c, 42d) de telle manière que
après la fermeture des moitiés d'outil (42c, 42d), l'élément de film est chauffable au moyen du module de chauffage (1), que l'outil de formage (41) présente des moyens pour l'application d'une chute de pression entre le côté avant et arrière (2c, 2d) de l'élément de film (2) de telle manière que par la chute de pression entre le côté avant et arrière (2c, 2d) de l'élément de film (2), l'élément de film (2) soit déformé pour la réalisation de la pièce moulée (21).

10. Dispositif selon la revendication 8 ou 9,
**caractérisé en ce que**
le dispositif présente une station de moulage (4) qui comporte l'outil de formage (41), que le dispositif présente un chariot (45) pour la réception de l'élément de film (2), que le dispositif présente un dispositif de transport (44) pour le transport de l'élément de film (2) au moyen du chariot (45) au module de chauffage (2) et à la station de moulage (4).

11. Dispositif selon l'une quelconque des revendications 8 à 10,
**caractérisé en ce que**
l'outil de formage (41) présente une première moitié d'outil (42a) et présente une seconde moitié d'outil (42b), dans lequel l'élément de film (2) peut être agencé entre la première moitié d'outil (42a) et la seconde moitié d'outil (42b), que l'outil de formage (41) présente en option un dispositif de serrage (46) pour le serrage de l'élément de film (2), que le module de chauffage (1) est logé de manière mobile de telle manière que le module de chauffage (1) puisse être rentré entre l'élément de film (2) et la seconde moitié d'outil (42b) et puisse être sorti avant la fermeture des moitiés d'outil (42a, 42b), et que la première et/ou la seconde moitié d'outil (42a, 42b) présente au moins un canal d'injection (43) pour l'injection d'un matériau fondu.

12. Procédé de fabrication d'une pièce moulée (21),
**caractérisé en ce que**
un élément de film (2) est chauffé au moyen d'un module de chauffage (1) selon la revendication 1 qui présente deux ou plusieurs segments de chauffage (1a) avec respectivement un ou plusieurs éléments de chauffage (1b) pour le chauffage d'une première zone (2a) associée au segment de chauffage (1a) respectif de l'élément de film (2), dans lequel le module de chauffage (1) et/ou au moins un des segments de chauffage (1a) comporte au moins un capteur (3) pour la mesure de l'état du chauffage de l'élément de film (2), et que l'élément de film (2) est déformé pour la réalisation de la pièce moulée (21), en particulier par pulvérisation par l'arrière, emboutissage profond et/ou établissement d'une chute de pression entre le côté avant et arrière (2c, 2d) de l'élément de film (2).

13. Procédé selon la revendication 12,
**caractérisé en ce que** la puissance de chauffage des deux ou plusieurs segments de chauffage (1a) est fixée ou réglée respectivement individuellement
et/ou que la puissance de chauffage au moins d'un des segments de chauffage (1a) est fixée ou réglée sur la base de l'état détecté par l'au moins un capteur (3) du chauffage de l'élément de film (2)
et/ou que la puissance de chauffage au moins d'un des segments de chauffage (1a) est fixée ou réglée sur la base de l'état détecté par l'au moins un capteur (3) du chauffage de l'élément de film (2) ainsi qu'un profil de température de consigne déterminé par la création de contour de la partie de moulage (21), prédéfini de l'élément de film (2).

14. Procédé selon l'une quelconque des revendications 12 ou 13,
**caractérisé en ce que**
la puissance de chauffage au moins d'un des segments de chauffage (1a) est fixée ou réglée sur la base de l'état détecté par l'au moins un capteur (3) du chauffage de l'élément de film (2) ainsi que des données sur le contour de la pièce moulée (21)
et/ou que le positionnement des segments de chauffage (1a) est fixé ou réglé sur la base de données sur le contour de la pièce moulée (21)
et/ou que les données sur le contour de l'élément de film (2) comportent une ou plusieurs des données suivantes : présence et position de courbures du contour, rayon de courbure, sens de courbure, espacement d'une surface de référence, en particulier plan de référence, espacement vertical ou horizontal d'une zone de surface du contour d'un ou plusieurs des segments de chauffage (1a), position d'évidements et/ou interruptions de la pièce moulée (21).

15. Procédé selon l'une quelconque des revendications 12 à 14,
**caractérisé en ce que**
la puissance de chauffage au moins d'un des segments de chauffage (1a) est fixée ou réglée sur la base de l'état détecté par l'au moins un capteur (3) du chauffage de l'élément de film (2) dans la première zone (2a) associée au segment de chauffage (1a) de l'élément de film (2)
et/ou que la puissance de chauffage au moins d'un des segments de chauffage (1a) est fixée ou réglée sur la base de l'état détecté par l'au moins un capteur (3) du chauffage de l'élément de film (2) dans la première zone (2a) associée à un autre des segments de chauffage (1a) de l'élément de film (2).

16. Procédé selon l'une quelconque des revendications 12 à 15,
**caractérisé en ce que**
le capteur (3) ou au moins un des capteurs (3) détecte l'état de chauffage de l'élément de film (2) sans contact dans une ou plusieurs secondes zones (2b) associées de l'élément de film (2), en particulier détecte la température de surface de l'élément de film (2) dans les une ou plusieurs secondes zones (2b) associées de l'élément de film (2), et/ou que la seconde zone (2b) ou au moins une des secondes zones (2b) de l'élément de film (2), dans laquelle ou lesquelles le capteur (3) ou les capteurs (3) détectent l'état du chauffage de l'élément de film (2), chevauche au moins partiellement une des premières zones (2a) de l'élément de film (2), en particulier est agencée à l'intérieur de la première zone (2a) de l'élément de film (2).

17. Procédé selon l'une quelconque des revendications 12 à 16,
**caractérisé en ce que**
l'agencement de position relative de deux ou plusieurs des segments de chauffage (1a) est fixé ou réglé l'un par rapport à l'autre au moyen d'un dispositif de réglage (11) du module de chauffage (1)
et/ou que la position horizontale ou verticale d'un ou plusieurs des segments de chauffage (1a) qui sont logés de manière coulissante dans le module de chauffage (1) dans le sens vertical ou horizontal, est fixée ou réglée au moyen du dispositif de réglage, et/ou l'angle de basculement d'un ou plusieurs des segments de chauffage (1a) qui sont logés de manière basculable dans le module de chauffage (1), est fixé ou réglé au moyen du dispositif de réglage (11), est adapté en particulier au contour de l'élément de film (2).

18. Procédé selon l'une quelconque des revendications 12 à 17,
**caractérisé en ce que**
le procédé comporte les étapes suivantes :
- l'agencement de l'élément de film (2) entre deux moitiés d'outil (42c, 42d) ;
- la fermeture des moitiés d'outil (42c, 42d) ;
- le chauffage de l'élément de film (2) au moyen du module de chauffage (1) qui est agencé dans la moitié d'outil inférieure et/ou supérieure (42c, 42d) ;
- la déformation de l'élément de film (2) par application d'une chute de pression entre le côté avant et arrière (2c, 2d) de l'élément de film (2) pour la réalisation de la pièce moulée (21) ;
- le retrait de la pièce moulée (21).
